# EUROPEAN PATENT APPLICATION

(11) **EP 1 339 179 A2**
(43) Date of publication of application: **27.08.2003**
(21) Application number: 03003870.7
(22) Date of filing: 20.02.2003
(51) Int. Cl.: H04B 10/24

(54) **Bi-directional optical transmission system, and master and slave stations used therefor**

(30) Priority: 26.02.2002 JP 2002050046; 12.12.2002 JP 2002360829
(71) Applicant: Matsushita Electric Industrial Co., Ltd., Kadoma-shi, Osaka-fu 571-8501 (JP)
(72) Inventor: Yamamoto, Hiroaki, Osaka-shi, Osaka-fu 536-0017 (JP); Tanabe, Manabu, Kawasaki-shi, Kanagawa-ken 213-0033 (JP); Utsumi, Kuniaki, Sanda-shi, Hyogo-ken 669-1348 (JP)
(74) Representative: Gassner, Wolfgang, Dr.

(57) **Abstract**

An object of the present invention is to provide a bi-directional optical transmission system wherein a single optical fiber is shared by upstream and downstream systems, thereby eliminating the need for providing an additional optical fiber and reducing the number of maintenance operations. A master station (400) for outputting a downstream optical signal is connected via an optical transmission path (200) to slave stations (500a-500c) each for outputting an upstream optical signal. The optical transmission path (200) includes a single optical fiber connecting at one end to the master station (400), and optical branching units (202a, 202b) branching the single optical fiber for connection to the slave stations. The master station (400) includes an optical passive unit (405) which supplies an upstream optical signal coming through the single optical fiber only to an optical-electrical converter (404) and supplies a downstream optical signal output from an electrical-optical converter (403) only to the single optical fiber. Each slave station includes an optical passive unit (505) which supplies a downstream optical signal coming through the single optical fiber only to an optical-electrical converter (504) and supplies an upstream optical signal output from an electrical-optical converter (503) only to the single optical fiber.

## Description

### BACKGROUND OF THE INVENTION

### Field of the Invention

The present invention relates to bi-directional optical transmission systems in which a master station sends a signal to a plurality of slave stations, and wireless electric waves are emitted from antennas of the slave stations into space. More specifically, the present invention relates to a bi-directional optical transmission system applicable to a mobile communications system in a portable phone system.

### Description of the Background Art

Conventionally, for the purpose of enabling portable-phone communications even when a portable phone is located within a blind zone (an area, such as a tunnel, a building, and an underground shopping area, that is shielded from electric fields), a system has been suggested in which a plurality of antenna stations each having only an amplifier circuit are provided in such a blind zone and are connected to a master station via an optical fiber for bi-directional transfer of transmission/reception signals.

An example of the above-described system is disclosed in "PDC optical transmitting apparatus" by Tsubosaka et al., Matsushita Technical Journal Vol.44, No.6, Dec. 1998, 11. 49-62. A PDC (Personal Digital Cellular) wireless multipoint optical link system disclosed in this document has a configuration such that a base-station modulator/demodulator and a master station are provided at one place, and a plurality of antenna stations (hereinafter, slave stations) each having only an amplifier circuit are provided inside a building or an underground shopping area. The master station and the plurality of slave stations are connected to each other via an optical fiber. The master station and the slave stations exchange with each other an optical signal modulated with a PDC wireless signal. The type of connection of the optical fiber connecting the master station and the slave stations is known as "multi-drop topology" (or bus connection), as described in the above document.

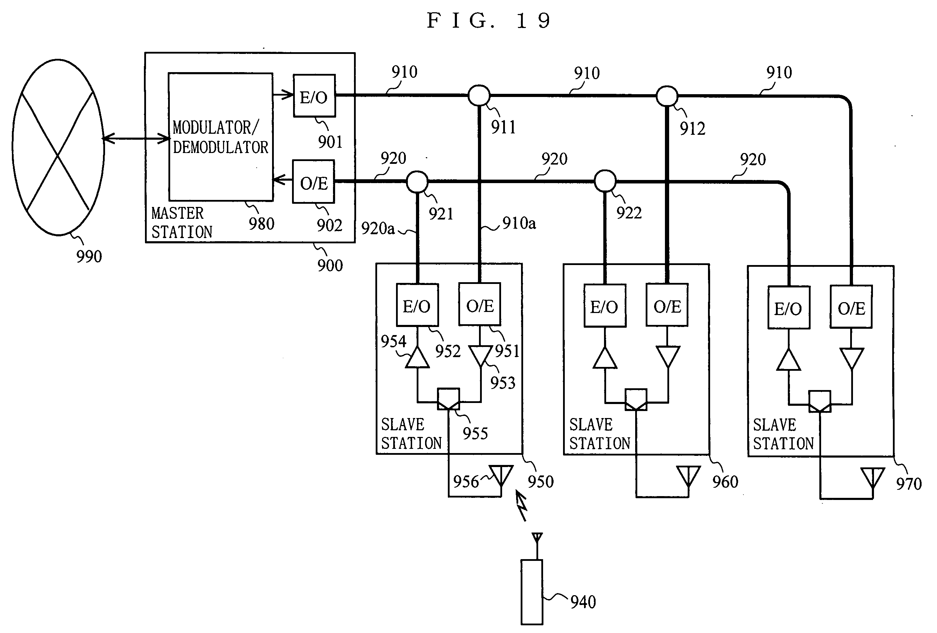

FIG. 19 is an illustration showing the configuration of a conventional PDC wireless multipoint optical link system. In FIG. 19, the conventional PDC wireless multipoint optical link system includes a master station 900, and a plurality of slave stations 950, 960, and 970. The master station 900 and the slave station 970 are connected to each other via optical fibers 910 and 920. The optical fibers 910 and 920 are branched by optical branching units 911 and 921, respectively, for connecting the master station 900 and the slave station 950. Also, the optical fibers 910 and 920 are branched by optical branching units 912 and 922, respectively, for connecting the master station 900 and the slave station 960.

The master station 900 includes a modulator/demodulator 980, an optical transmitter 901, and an optical receiver 902. The slave station 950 includes an optical receiver 951, an optical transmitter 952, a power amplifier 953, a low-noise amplifier 954, a duplexer 955, and an antenna 956. The optical receiver 951 is connected to an output terminal of the optical branching unit 911 via an optical fiber 910a. The optical transmitter 952 is connected to an input terminal of the optical branching unit 921 via an optical fiber 920a.

Each slave station has the same structure. Hereinafter, descriptions of the function of the slave station are made only to the slave station 950, however, the descriptions also apply to the other slave stations.

In downstream transmission, the modulator/demodulator 980 modulates a carrier signal with data from a mobile communications network 990 to produce a sub-carrier modulated signal, which is herein referred to as a downstream electrical signal. With the downstream electrical signal, the optical transmitter 901 intensity-modulates an optical signal output from a light source, and then outputs the intensity-modulated optical signal to the optical fiber 910. The optical signal output from the optical transmitter 901 is supplied via the optical branching unit 911 and the optical fiber 910a to the optical receiver 951 of the slave station 950. The optical receiver 951 converts the received optical signal into an electrical signal for output. The electrical signal output from the optical receiver 951 is amplified by the power amplifier 953, is supplied to the duplexer 955, is emitted from the antenna 956 into space as an electric wave, and is then received by a portable terminal 940.

In upstream transmission, the portable terminal 940 emits an electric wave into space. Here, it is assumed that the electric wave emitted from the portable terminal 940 is received by the antenna 956 of the slave station 950. The electric wave, that is, a sub-carrier modulated signal (hereinafter referred to as an upstream electrical signal), received by the antenna 956 is supplied via the duplexer 955 to the low-noise amplifier 954 for amplification. Then, the amplified upstream electrical signal is supplied to the optical transmitter 952. With the received upstream electrical signal, the optical transmitter 952 intensity-modulates an optical signal from the light source, and then outputs the resultant signal to the optical fiber 920a. The optical signal from the optical transmitter 952 is sent via the optical fiber 920a and the optical branching unit 921 to join the optical fiber 920, and then is supplied to the optical receiver 902 of the master station 900. The optical receiver 902 converts the received optical signal into an upstream electrical signal for output to the modulator/demodulator 980. The modulator/demodulator 980 demodulates the received upstream electrical signal to obtain data from the portable terminal 940, and then sends the data to the mobile communications network 990.

As such, with the use of the above-described PDC wireless multipoint optical link system, bi-directional communications can be made between the portable terminal 940 and the mobile communications network 990 even when the portable terminal 940 is located within a blind zone.

In the above-described optical fiber connection used in the conventional system, however, an optical fiber is required for each of the downstream system from the master station to the slave stations and the upstream system from the slave stations to the master station. Therefore, when a new slave station is placed, it is required to perform operations, such as cut-off and reconnection, on both of the optical fibers in the downstream and upstream systems, thereby increasing the number of operations.

Moreover, maintenance is also required for both of the optical fibers in the downstream and upstream systems, thereby increasing the number of operations.

### SUMMARY OF THE INVENTION

Therefore, an object of the present invention is to provide a bi-directional optical transmission system wherein a single optical fiber is shared by upstream and downstream systems, thereby eliminating the need for providing an additional optical fiber and reducing the number of maintenance operations.

The present invention has the following features to attain the object mentioned above.

A first aspect of the present invention is directed to a system for bi-directional optical communications between a master station and a plurality of slave stations, wherein
the master station and the slave stations are connected to each other via a single optical fiber,
the master station transmits a downstream optical signal to each of the slave stations via the single optical fiber, and each of the slave stations transmits an upstream optical signal to the master station via the single optical fiber,
the master station includes:
a first electrical-optical converter for converting an electrical signal to the downstream optical signal;
a first optical-electrical converter for converting the upstream optical signal to an electrical signal; and
a first optical exchange element, provided between the single optical fiber, and the first electrical-optical converter and the first optical-electrical converter, for outputting the downstream optical signal supplied by the first electrical-optical converter to the single optical fiber and outputting the upstream optical signal transmitted through the single optical fiber to the first optical-electrical converter, and
   each of the slave stations includes:
   a second electrical-optical converter for converting an electrical signal to the upstream optical signal;
   a second optical-electrical converter for converting the downstream optical signal to an electrical signal; and
   a second optical exchange element, provided between the single optical fiber, and the second electrical-optical converter and the second optical-electrical converter, for outputting the upstream optical signal supplied by the second electrical-optical converter to the single optical fiber and outputting the downstream optical signal transmitted through the single optical fiber to the second optical-electrical converter.

According to the first aspect, each of the master station side and the slave station side is provided with an optical exchange element. With this, a single optical fiber can be shared by the upstream and downstream systems. Therefore, it is possible to provide a bi-directional optical transmission capable of eliminating the need for providing an additional optical fiber and reducing the number of maintenance operations.

Preferably, the master station further includes:
a signal level adjusting circuit for adjusting an amplitude of an electrical signal, and outputting the amplitude-adjusted electrical signal;
a delay adjusting circuit for adjusting a phase of the electrical signal outputted from the signal level adjusting circuit, and outputting the phase-adjusted electrical signal; and
a combiner for combining the electrical signal outputted from the delay adjusting circuit and the electrical signal outputted from the first optical-electrical converter

With this, the downstream electrical signal leaking due to, for example, reflection on the optical transmission path can be cancelled. Thus, degradation in the quality of the upstream electrical signal can be prevented.

For example, the signal level adjusting circuit adjusts the amplitude based on a predetermined amplitude value, and
the delay adjusting circuit adjusts the phase based on a predetermined amount of delay.

With this, the amplitude and the phase are adjusted based on the predetermined amplitude value and the predetermined amount of delay, respectively.

Also, the signal level adjusting circuit may adjust the amplitude based on a feedback of an electrical signal obtained by the combiner, and
the delay adjusting circuit may adjust the phase based on the feedback of the electrical signal obtained by the combiner.

With this, the amplitude and the phase can be automatically adjusted, thereby automatically suppressing any leaking downstream or upstream electrical signal.

Preferably, each of the slave stations further includes:
a signal level adjusting circuit for adjusting an amplitude of an electrical signal, and outputting the amplitude-adjusted electrical signal;
a delay adjusting circuit for adjusting a phase of the electrical signal outputted from the signal level adjusting circuit, and outputting the phase-adjusted electrical signal; and
a combiner for combining the electrical signal outputted from the delay adjusting circuit and the electrical signal outputted from the second optical-electrical converter.

With this, the upstream electrical signal leaking due to, for example, reflection on the optical transmission path can be cancelled. Thus, degradation in the quality of the downstream electrical signal can be prevented.

For example, the signal level adjusting circuit adjusts the amplitude based on a predetermined amplitude value, and
the delay adjusting circuit adjusts the phase based on a predetermined amount of delay.

With this, the amplitude and the phase are adjusted based on the predetermined amplitude value and the predetermined amount of delay, respectively.

Also, the signal level adjusting circuit may adjust the amplitude based on a feedback of an electrical signal obtained by the combiner, and
the delay adjusting circuit may adjust the phase based on the feedback of the electrical signal obtained by the combiner.

With this, the amplitude and the phase can be automatically adjusted, thereby automatically suppressing any leaking downstream or upstream electrical signal.

Furthermore, the downstream optical signal and the upstream optical signal may be different in wavelength band,
the first optical exchange element may be a wavelength multiplexing coupler for supplying the downstream optical signal only to the single optical fiber and supplying the upstream optical signal only to the first optical-electrical converter, and
the second optical exchange element may be a wavelength multiplexing coupler for supplying the upstream optical signal only to the single optical fiber and supplying the downstream optical signal only to the second optical-electrical converter.

Therefore, with the first and second optical exchange elements, the upstream and downstream optical signals can be reliably separated from each other.

In this case, the first electrical-optical converter may output a downstream optical signal having a small amount of wavelength dispersion in the single optical fiber, and
the second electrical-optical converter may output an upstream optical signal having a large amount of wavelength dispersion in the single optical fiber. With this, it is possible to reduce influences of degradation in transmission quality due to wavelength dispersion on the optical fiber in both of the upstream and downstream systems.

Also, the first optical exchange element may be an optical branching unit for branching the upstream optical signal transmitted through the single optical fiber into two optical signals, and
the master station may further include an optical attenuator placed between the first optical exchange element and the first electrical-optical converter.

Thus, with the use of the optical branching unit, the system can be provided at low cost. Moreover, with the optical attenuator provided, the occurrence of noise can be suppressed.

In this case, preferably, the optical attenuator may attenuate the upstream optical signal output from the first optical exchange element so that a ratio of an optical power of the upstream optical signal output from the first optical exchange element with respect to an optical power of the downstream optical signal output from the first electrical-optical converter becomes - 20dB or lower. With this, noise occurring at the first electrical-optical converter can be suppressed.

Also, the second optical exchange element may be an optical branching unit for branching the downstream optical signal transmitted through the single optical fiber, and
each of the slave station may further include an optical attenuator placed between the second optical exchange element and the second electrical-optical converter.

Thus, with the use of the optical branching unit, the system can be provided at low cost. Moreover, with the optical attenuator provided, the occurrence of noise can be suppressed.

In this case, preferably, the optical attenuator may attenuate the downstream optical signal output from the second optical exchange element so that a ratio of an optical power of the downstream optical signal output from the second optical exchange element with respect to an optical power of the upstream optical signal output from the second electrical-optical converter becomes -20dB or lower. With this, noise occurring at the second electrical-optical converter can be suppressed.

Also, the first optical exchange element may be an optical branching unit for branching the upstream optical signal transmitted through the single optical fiber into two optical signals, and
the master station may further include an optical isolator placed between the first optical exchange element and the first electrical-optical converter.

Thus, no interfering light is supplied to the light source of the first electrical-optical converter. Therefore, the occurrence of noise can be suppressed.

In this case, preferably, an isolation of the optical isolator may be -20dB or lower. With this, the occurrence of noise can be sufficiently suppressed.

Also, the second optical exchange element may be an optical branching unit for branching the downstream optical signal transmitted through the single optical fiber, and
each of the slave station may further include an optical isolator placed between the second optical exchange element and the second electrical-optical converter.

Thus, no interfering light is supplied to the light source of the second electrical-optical converter. Therefore, the occurrence of noise can be suppressed.

In this case, preferably, an isolation of the optical isolator is -20dB or lower. With this, the occurrence of noise can be sufficiently suppressed.

Also, the downstream optical signal and the upstream optical signal may be different in wavelength band, and
the first and/or second optical exchange element may be an optical branching unit for branching an optical signal transmitted through the single optical fiber into two optical signals.

Thus, with the use of the optical branching unit, the system can be provided at low cost. Moreover, since the downstream and upstream optical signals are different in wavelength band, the occurrence of noise can be suppressed.

Also, the first and second optical exchange elements may be optical circulators each having at least three terminals. Therefore, with the first and second optical exchange elements, the upstream and downstream optical signals can be reliably separated from each other.

For example, the slave stations may be connected to the master station via the single optical fiber to form a bus connection. Alternatively, the slave stations may be connected to the master station via the single optical fiber to form a star connection.

For example, the electrical signals supplied to the first and second electrical-optical converters may be sub-carrier modulated signals. Thus, the bi-directional optical transmission system can be used for a mobile communications system.

Furthermore, each of the slave stations may further include a frequency converter for converting the electrical signal to be supplied to the second electrical-optical converter to an electrical signal having a frequency band that is different from a frequency band of the electrical signal to be supplied to the first electrical-optical converter. Thus, the downstream electrical signal and the upstream electrical signals can be made different in frequency band from each other.

Still further, frequency bands of the electrical signals supplied to the first and second electrical-optical converters may be different from each other, and
each of the slave stations may further include a frequency converter for converting a frequency of the electrical signal output from the second optical-electrical converter to a frequency band of the electrical signal supplied to the first electrical-optical converter. Thus, it is possible to get the downstream electrical signal back to the frequency band of the upstream electrical signal.

Still further, the second electrical-optical converters of the slave stations may output optical signals having different wavelengths. With this, the upstream optical signals output from the slave stations are different from each other, thereby suppressing optical beat interference.

Preferably, in the first aspect, the upstream optical signal output from each of the slave stations has been time-division-multiplexed.

With this, optical beat interference can be suppressed.

As a specific embodiment, each of the slave stations further includes a wireless transmitter/receiver for wirelessly transmitting and receiving the downstream electrical signal and the upstream electrical signal.

With this, each of the slave stations can transmit and receive a downstream electrical signal.

A second aspect of the present invention is directed to a system for bi-directional optical communications between a master station and a plurality of slave stations located on a plurality of groups, wherein
a radio communications area of one group overlaps with another radio communications area of another group,
the master station and each of the slave stations of a same group are connected to each other via a single optical fiber,
the master station transmits a downstream optical signal to each of the slave stations of the same group via the single optical fiber, and each of the slave stations of the same group transmits an upstream optical signal to the master station via the single optical fiber,
the master station includes, for each of the groups,
   a first electrical-optical converter for converting an electrical signal to the downstream optical signal;
   a first optical-electrical converter for converting the upstream optical signal to an electrical signal; and
   a first optical exchange element, provided between the single optical fiber, and the first electrical-optical converter and the first optical-electrical converter, for outputting the downstream optical signal supplied by the first electrical-optical converter to the single optical fiber and outputting the upstream optical signal transmitted through the single optical fiber to the first optical-electrical converter, and
each of the slave stations includes:
a second electrical-optical converter for converting an electrical signal to the upstream optical signal;
a second optical-electrical converter for converting the downstream optical signal to an electrical signal; and
a second optical exchange element, provided between the single optical fiber, and the second electrical-optical converter and the second optical-electrical converter, for outputting the upstream optical signal supplied by the second electrical-optical converter to the single optical fiber and outputting the downstream optical signal transmitted through the single optical fiber to the second optical-electrical converter.

According to the second aspect, the mobile terminal for communicating with slave stations can receive radio signals from a plurality of slave stations. Thus, space diversity can be achieved.

A third aspect of the present invention is directed to a master station for bi-directional optical communications with a plurality of slave stations,
the master station being connected to each of the slave stations via a single optical fiber,
the master station transmitting a downstream optical signal to each of the slave stations via the single optical fiber, and receiving an upstream optical signal transmitted from each of the slave stations via the single optical fiber, and
the master station including:
   an electrical-optical converter for converting an electrical signal to the downstream optical signal;
   an optical-electrical converter for converting the upstream optical signal into an electrical signal;
   an optical exchange element provided between the single optical fiber, and the electrical-optical converter and the optical-electrical converter, for outputting the upstream optical signal supplied by the electrical-optical converter to the single optical fiber and outputting the downstream optical signal transmitted through the single optical fiber to the optical-electrical converter;
   a signal level adjusting circuit for adjusting an amplitude of an electrical signal, and outputting the amplitude-adjusted electrical signal;
   a delay adjusting circuit for adjusting a phase of the electrical signal output from the signal level adjusting circuit, and outputting the phase-adjusted electrical signal; and
   a combiner for combing the electrical signal output from the delay adjusting circuit and the electrical signal output from the optical-electrical converter.

Preferably, the signal level adjusting circuit adjusts the amplitude based on a predetermined amplitude value, and
the delay adjusting circuit adjusts the phase based on a predetermined amount of delay.

Also, the signal level adjusting circuit may adjust the amplitude based on a feedback of an electrical signal obtained by the combiner, and
the delay adjusting circuit may adjust the phase based on the feedback of the electrical signal obtained by the combiner.

A fourth aspect of the present invention is directed to a slave station for bi-directional optical communications with a master station,
the slave station being connected to the master station via a single optical fiber,
the slave station receiving a downstream optical signal transmitted from the master station via the single optical fiber, and transmitting an upstream optical signal to the master station via the single optical fiber, and
the slave station including:
   an electrical-optical converter for converting an electrical signal to the upstream optical signal;
   an optical-electrical converter for converting the downstream optical signal into an electrical signal;
   an optical exchange element provided between the single optical fiber, and the electrical-optical converter and the optical-electrical converter, for outputting the upstream optical signal supplied by the electrical-optical converter to the single optical fiber and outputting the downstream optical signal transmitted through the single optical fiber to the optical-electrical converter;
   a signal level adjusting circuit for adjusting an amplitude of an electrical signal, and outputting the amplitude-adjusted electrical signal;
   a delay adjusting circuit for adjusting a phase of the electrical signal output from the signal level adjusting circuit, and outputting the phase-adjusted electrical signal; and
   a combiner for combing the electrical signal output from the delay adjusting circuit and the electrical signal output from the optical-electrical converter.

Preferably, the signal level adjusting circuit adjusts the amplitude based on a predetermined amplitude value, and
the delay adjusting circuit adjusts the phase based on a predetermined amount of delay.

Also, the signal level adjusting circuit may adjust the amplitude based on a feedback of an electrical signal obtained by the combiner, and
the delay adjusting circuit may adjust the phase based on the feedback of the electrical signal obtained by the combiner.

A fifth aspect of the present invention is directed to a system for bi-directional optical communications between a master station and a plurality of slave stations, wherein
the master station and the slave stations are connected to each other via a single optical fiber,
the slave stations are assigned different wavelengths of downstream optical signals transmitted from the master station to the slave stations,
the slave stations are assigned different wavelength of upstream optical signals transmitted from the slave stations to the master station,
the master station transmits the downstream optical signals to the respective slave stations via the single optical fiber, and the slave stations respectively transmit the upstream optical signals to the master station via the single optical fiber,
the master station includes:
   a plurality of first electrical-optical converters, provided correspondingly to the slave stations, each for converting an electrical signal to a downstream optical signal having a wavelength assigned to a corresponding slave station;
   a plurality of optical-electrical converters, provided correspondingly to the slave stations, each for converting an upstream optical signal supplied by a corresponding slave station to an electrical signal; and
   a wavelength multiplexer/demultiplexer for wavelength-multiplexing the downstream optical signals supplied by the first electrical-optical converters and outputting a multiplexed signal to the single optical fiber, and for wavelength-demultiplexing the upstream optical signals transmitted through the single optical fiber and outputting optical signals correspondingly in wavelength to the first optical-electrical converters, and
   each of the slave stations includes:
   a second electric-optical converter for converting an electrical signal to an upstream optical signal having a wavelength assigned to the slave station;
   a second optical-electrical converter for converting the downstream optical signal to an electrical signal; and
   an optical add/drop unit, provided between the single optical fiber, and the second electrical-optical converter and the second optical-electrical converter, for outputting the upstream optical signal supplied by the second electrical-optical converter to the single optical fiber and outputting only a downstream optical signal having a wavelength assigned to the slave station from out of the downstream optical signals transmitted through the single optical fiber to the second optical-electrical converter.

With the structure of the above fifth aspect, a single optical fiber can be shared by the upstream and downstream systems, and the need for providing an additional optical fiber can be eliminated. Also, the number of maintenance operations can be reduced.

For example, the optical add/drop unit is structured by connecting, in series, two wavelength combining/branching units each having three terminals.

Also, preferably, the optical add/drop unit includes:
a wavelength combiner for combining the upstream optical signal output from the second electrical-optical converter and the upstream optical signal transmitted through the single optical fiber; and
a wavelength separator for separating only an optical signal having a wavelength assigned to a corresponding slave station from a plurality of said downstream optical signals transmitted through the single optical fiber, and outputting the separated optical signal to the second optical-electrical converter,
the wavelength combiner and the second electrical-optical converter is integrated as an optical transmission module, and
the wavelength separator and the second optical-electrical converter is integrated as an optical reception module.

Thus, the optical transmission module and the optical reception module can be reduced in size. Therefore, the slave station itself can be reduced in size.

Furthermore, preferably, the optical add/drop unit includes:
a wavelength combining/branching unit having three terminals; and
an optical circulator having first, second, and third terminals, the first terminal being connected to one of the three terminals of the wavelength combining/branching unit, for transmitting and receiving only an optical signal having a wavelength assigned to a corresponding slave station,
the second terminal of the optical circulator is connected to the second electrical-optical converter and the third terminal of the optical circulator is connected to the second optical-electrical converter, and
the wavelength of the downstream optical signal and the wavelength of the upstream optical signal assigned to each of the slave stations are equal to each other.

As such, with the use of the optical circulator, the wavelength of the downstream optical signal and the wavelength of the upstream optical signal for each of the slave stations can be equal to each other. Therefore, the number of wavelengths for use in the light sources can be reduced.

Still further, the optical add/drop unit may include:
a wavelength combining/branching unit having three terminals; and
an optical branching unit having first, second, and third terminals, the first terminal being connected to one of the three terminals of the wavelength combining/branching unit, for transmitting and receiving only an optical signal having a wavelength assigned to a corresponding slave station,
the second terminal of the optical branching unit may be connected to the second electrical-optical converter and the third terminal of the optical branching unit is connected to the second optical-electrical converter, and
the wavelength of the downstream optical signal and the wavelength of the upstream optical signal assigned to each of the slave stations may be equal to each other.

As such, with the use of the optical branching unit, the cost required for the slave station can be reduced.

In this case, preferably, the optical add/drop unit may further include an optical isolator placed between the second terminal of the optical branching unit and the second electrical-optical converter. Thus, no interfering light is supplied to the light source of the second electrical-optical converter. Therefore, the occurrence of noise at the light source can be suppressed.

For example, the electrical signals supplied to the first electrical-optical converter and the second electrical-optical converter are sub-carrier modulated signals.

As a specific embodiment, each of the slave stations further includes a wireless transmitter/receiver for wirelessly transmitting and receiving the upstream electrical signal supplied to the second electrical-optical converter and the downstream electrical signal output from the second optical-electrical converter.

In this case, the upstream electrical signal and the downstream electrical signal may be portable phone signals.

Also, preferably, a wavelength interval for each of the slave station is 20nm.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the configuration of a bi-directional optical transmission system according to a first embodiment of the present invention;
FIG. 2 is a block diagram illustrating one example of the structure of an optical passive unit 405;
FIG. 3 is an illustration showing the structure of an optical transmission path 200 when a master station 400 and each slave station are connected to one another in a star connection;
FIG. 4 is a block diagram illustrating the structure of an optical passive unit 505 implemented by a WDM coupler;
FIG. 5 is a block diagram illustrating the configuration of a bi-directional optical transmission system according to a second embodiment of the present invention;
FIG. 6 is a block diagram illustrating the configuration of a bi-directional optical transmission system according to a third embodiment of the present invention;
FIG. 7 is an illustration showing experimental results obtained by measuring a frequency distribution of relative intensity noise (RIN) in an optical signal emitted from a first semiconductor laser when the first semiconductor laser is supplied, by a second semiconductor laser, with light having the same wavelength as that of light being emitted from the first semiconductor laser;
FIG. 8 is a block diagram illustrating the configuration of a bi-directional optical transmission system according to a fourth embodiment of the present invention;
FIG. 9 is a block diagram illustrating the configuration of a bi-directional optical transmission system according to a fifth embodiment of the present invention;
FIG. 10 is a block diagram illustrating the configuration of a bi-directional optical transmission system according to a sixth embodiment of the present invention;
FIG. 11 is a block diagram illustrating the configuration of a bi-directional optical transmission system according to a seventh embodiment of the present invention;
FIG. 12 is a block diagram illustrating the configuration of a bi-directional optical transmission system according to an eighth embodiment of the present invention;
FIG. 13 is a block diagram illustrating the configuration of a bi-directional optical transmission system according to a ninth embodiment of the present invention;
FIG. 14 is an illustration showing each optical add/drop unit according to the ninth embodiment;
FIG. 15 is a block diagram illustrating an optical add/drop unit 730 in a bi-directional optical transmission system according to a tenth embodiment of the present invention;
FIG. 16 is a block diagram illustrating an optical add/drop unit 740 in a bi-directional optical transmission system according to an eleventh embodiment of the present invention;
FIG. 17 is a block diagram illustrating an optical add/drop unit 750 in a bi-directional optical transmission system according to a twelfth embodiment of the present invention;
FIG. 18 is a block diagram illustrating another optical add/drop unit 760 in the bi-directional optical transmission system according to the twelfth embodiment of the present invention; and
FIG. 19 is an illustration showing the configuration of a conventional PDC wireless multipoint optical link system.

### DESCRIPTION OF THE PREFERRED EMBODIMENTS

### (First Embodiment)

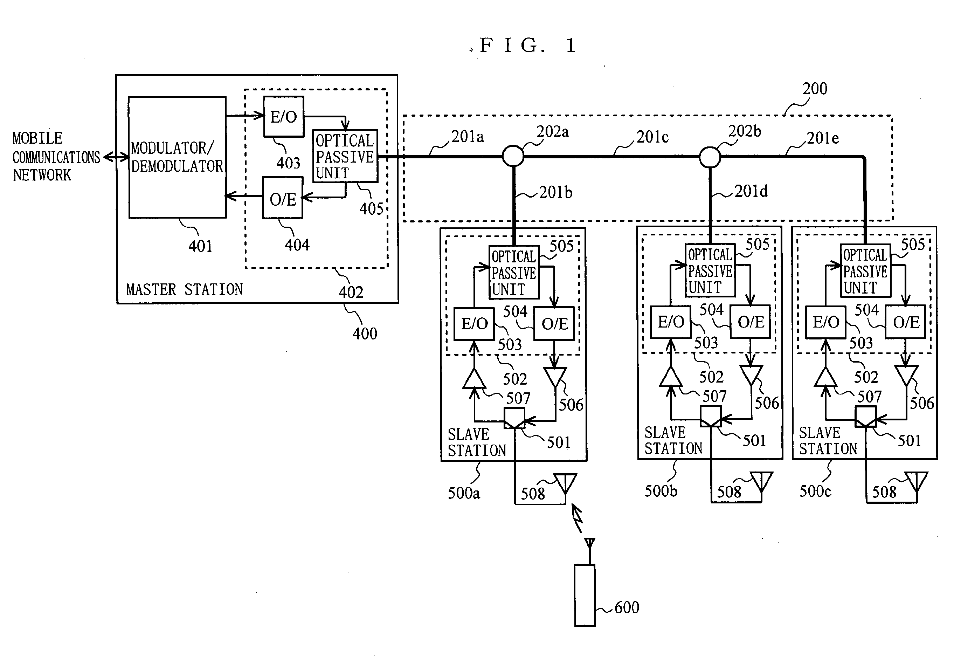

FIG. 1 is a block diagram illustrating the configuration of a bi-directional optical transmission system according to a first embodiment of the present invention. In FIG. 1, the bi-directional optical transmission system includes a master station 400, three slave stations 500a, 500b, and 500c, an optical transmission path 200, and a portable terminal 600. The master station 400 and the slave stations are connected to each other via the optical transmission path 200.

The master station 400 converts an electrical signal coming from a mobile communications network to an optical signal, and then sends the optical signal to each slave station via the optical transmission path 200. Also, the master station 400 converts an optical signal sent from each slave station into an electrical signal, and then sends the electric signal to the mobile communications network.

The portable terminal 600 performs wireless signal transmission to and reception from the slave stations within a predetermined area. Each slave station converts an optical signal from the master station 400 to an electrical signal for wireless transmission, and also receives a signal from the portable terminal 600 to convert the received signal to an optical signal for transmission to the master station 400 via the optical transmission path 200. Note that the number of slave stations within the area is not restricted to three, and may be two or less, or four or more. Also, the number of portable terminals 600 may be two or more.

The optical transmission path 200 includes an optical fiber 201a connected to an optical passive unit 405 of the master station 400, an optical branching unit 202a connected to one end of the optical fiber 201a, optical fibers 201b and 201c branching from the optical branching unit 202a, an optical branching unit 202b connected to one end of the optical fiber 201c, and optical fibers 201d and 201e branching from the optical branching unit 202b. Each of the optical fibers 201a to 201e is a single optical fiber. One end of the optical fiber 201b is connected to an optical passive unit 505 of the slave station 500a. One end of the optical fiber 201d is connected to an optical passive unit 505 of the slave station 500b. One end of the optical fiber 201e is connected to an optical passive unit 505 of the slave station 500c.

The optical transmission path 200 connects the master station 400 and each of the slave stations in a so-called bus connection by using the optical branching units 202a and 202b.

The optical branching unit 202a branches an optical signal sent through the optical fiber 201a into two optical signals, one being supplied to the optical fiber 201b and the other being supplied to the optical fiber 201c, and sends these optical signals from the optical fibers 201b and 201c to the optical fiber 201a. The optical branching unit 202b branches an optical signal sent through the optical fiber 201c into two optical signals, one being supplied to the optical fiber 201d and the other being supplied to the optical fiber 201e, and sends these optical signals from the optical fibers 201d and 201e to the optical fiber 201c. A ratio of branching at each of the optical branching unit 202a and 202b is set so that the optical signals supplied to the slave stations are equal in power.

The master station 400 includes a modulator/demodulator 401, and an optical transmitter/receiver 402. The optical transmitter/receiver 402 includes an electrical-optical converter (abbreviated as "E/O" in the drawing) 403, an optical-electrical converter (abbreviated as "O/E" in the drawing) 404, and an optical Passive/unit 405.

The modulator/demodulator 401 modulates a signal coming from the mobile communications network for output to the electrical-optical converter 403, and demodulates an electrical signal from the optical-electrical converter 404 for transmission to the mobile communications network. The electrical-optical converter 403 uses a semiconductor laser as a light source for intensity-modulating an optical signal from the light source with the electrical signal supplied by the modulator /demodulator 401 for output to the optical passive unit 405. The optical-electrical converter 404 receives an optical signal sent from the optical passive unit 405, and converts the optical signal into an electrical signal for output to the modulator/demodulator 401.

The optical passive unit 405 forwards the optical signal output from the electrical-optical converter 403 to the optical fiber 201a, and also forwards the optical signal output from the optical fiber 201a to the optical-electrical converter 404. In this sense, the optical passive unit 405 can be an optical exchange element for exchanging optical signals.

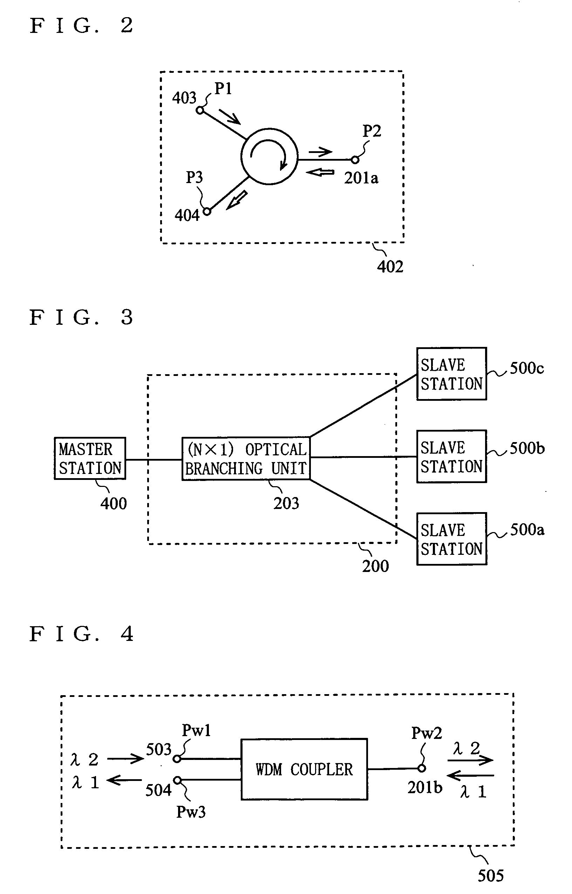

FIG. 2 is a block diagram illustrating one example of the structure of the optical passive unit 405. The optical passive unit 405 is structured by an optical circulator having three ports P1, P2, and P3. The port P1 is connected to the electrical-optical converter 403. The port P2 is connected to the optical fiber 201a of the optical transmission path 200. The port P3 is connected to the optical-electrical converter 404. An optical signal input from the port P1 is output not from the port P3 but from the port P1. An optical signal input from the port P2 is output not from the port P1 but from the port P3. In other words, the optical signal from the electrical-optical converter 403 is supplied to the optical fiber 201a, and the optical signal from the optical fiber 201a is supplied to the optical-electrical converter 404.

Each of the slave stations 500a to 500c has the same structure, and therefore components included in each slave station are provided with the same reference numerals. Hereinafter, descriptions of the function of the slave station are made only to the slave station 500a, and the descriptions also apply to the other slave stations. The slave station 500a includes a duplexer 501, an optical transmitter/receiver 502, a power amplifier 506, a low-noise amplifier 507, and an antenna 508. The optical transmitter/receiver 502 includes an electrical-optical converter 503, an optical-electrical converter 504, and an optical passive unit 505.

The structure of the optical passive unit 505 is similar to that of the optical passive unit 405 in the master station 400. That is, the optical passive unit 505 is exemplarily structured by an optical circulator. The optical passive unit 505 forwards an optical signal from the optical fiber 201b of the optical transmission path 200 to the optical-electrical converter 504. Also, the optical passive unit 505 forwards an optical signal from the electrical-optical converter 503 to the optical fiber 201b.

The optical-electrical converter 504 converts an optical signal from the optical passive unit 505 to an electrical signal for output to the power amplifier 506. The power amplifier 506 amplifies the received electrical signal for output to the duplexer 501. The duplexer 501 sends an electrical signal from the power amplifier 506 to the antenna 508, and also sends an electrical signal from the antenna 508 to the low-noise amplifier 507. These two operations by the duplexer 501 of sending the electrical signals do not interfere with each other. The antenna 508 transmits and receives an electric wave. The low-noise amplifier 507 amplifies the electrical signal from the duplexer 501 for output to the electrical-optical converter 503.

The electrical-optical converter 503 uses a semiconductor laser as a light source for intensity-modulating an optical signal from the light source with the received electrical signal, and then outputs the intensity-modulated optical signal to the optical passive unit 505 . A wavelength band of the optical signal output from the electrical-optical converter 503 may be equal to or different from a wavelength band of the optical signal output from the electrical-optical converter 403.

The operation of transmitting a downstream signal from the master station 400 to each slave station is described below. A downstream signal destined for the portable terminal 600 is first supplied from the mobile communications network to the modulator/demodulator 401. The modulator/demodulator 401 modulates a carrier signal with the received downstream signal to obtain a sub-carrier modulated signal for output to the electrical-optical converter 403. This sub-carrier modulated signal is hereinafter referred to as a downstream electrical signal.

The electrical-optical converter 403 intensity-modulates an optical signal from a light source with the received downstream electrical signal, and then outputs the intensity-modulated optical signal to the optical passive unit 405. The optical passive unit 405 forwards the optical signal received from the electrical-optical converter 403 to the optical fiber 201a. The optical signal passing through the optical fiber 201a is branched at the optical branching unit 202a into two optical signals, one being supplied to the optical fiber 201b and the other being supplied to the optical fiber 201c. The optical signal supplied to the optical fiber 201c is branched at the optical branching unit 202b into two optical signals, one being supplied to the optical fiber 201b and the other being supplied to the optical fiber 201e.

The optical signals passing through the optical fibers 201b, 201d, and 201e are respectively given to the optical passive unit 505 connected to one end of each corresponding optical fiber. The optical signal given to the optical passive unit 505 is forwarded to the optical-electrical converter 504 for conversion to a downstream electrical signal. The downstream electrical signal is supplied to the power amplifier 506 for amplification, is given to the duplexer 501, and is then emitted into space from the antenna 508. An electric wave emitted into space is received by the portable terminal 600.

The operation of transmitting an upstream signal is described below, assuming that the electric wave emitted into space from the. portable terminal 600 is received by the antenna 508 of the slave station 500a. The antenna 508 receives an electric wave from the information terminal 600. A sub-carrier modulated signal based on the received electric wave by the antenna 508 is hereinafter referred to as an upstream electrical signal. The upstream electrical signal received by the antenna 508 is given to the duplexer 501 and is then given to the low-noise amplifier 507 for amplification. The amplified upstream electrical signal is then supplied to the electrical-optical converter 503.

The electrical-optical converter 503 intensity-modulates an optical signal from a light source with the received upstream electrical signal for output to the optical passive unit 505. The optical passive unit 505 forwards the optical signal from the electrical-optical converter 503 to the optical fiber 201b. The optical signal passing through the optical fiber 201b is propagated by the optical branching unit 202a to the optical fiber 201a, and is then given to the optical passive unit 405 of the master station 400.

The optical signal given to the optical passive unit 405 is forwarded to the optical-electrical converter 404. The optical-electrical converter 404 converts the received optical signal to an upstream electrical signal for output to the modulator/demodulator 401. The modulator/demodulator 401 demodulates the received upstream electrical signal to obtain data from the portable terminal 600, and then sends the data to the mobile communications network.

The operation performed by each of the slave stations 500b and 500c at the time of receiving an electric wave from the portable terminal 600 is similar to that by the slave station 500a.

In the above-described manner, the mobile communications network and the portable terminal 600 can bidirectionally communicate with each other.

As such, in the bi-directional optical transmission system according to the first embodiment, the optical passive units 405 and 505 are used so as to allow a single optical fiber to be shared by the upstream and downstream systems. Therefore, the need for providing an additional optical fiber can be eliminated, and the number of maintenance operations can be reduced.

In multiplex transmission of the optical signals from three slave stations 500a, 500b, and 500c via the optical transmission path 200, wavelength bands of arbitrary two of these three optical signals may be close to each other, in some cases. In such cases, conversion of these two optical signals to electrical signals at the optical-electrical converter 404 may cause optical beat interference, thereby producing noise in the frequency band of the upstream electrical signal. In order to suppress such optical beat interference, the electrical-optical converters 503 of the three slave stations 500a, 500b, and 500c are configured so as to output optical signals of different wavelength bands within a range of available temperatures.

Also, in order to suppress such optical beat interference, the upstream optical signal from each slave station may be time-division-multiplexed for transmission.

Although the downstream and upstream electrical signals are sub-carrier modulated signals in the first embodiment, these electrical signals can be baseband signals. In this case, the modulator/demodulator 401 is placed not in the master station 400 but in each of the slave stations 500a to 500c.

Furthermore, in the first embodiment, the electrical-optical converters 403 and 503 each employ a direct optical intensity modulation scheme using a semiconductor laser as a light source. Alternatively, it is possible to employ an external optical modulation scheme using an external optical modulator supplied with a downstream or upstream electrical signal as an input signal.

Still further, in the first embodiment, the ratio of branching used by the optical branching units 202a and 202b is set so that the optical signals supplied to the slave stations become equal in power. This is not meant to be restrictive.

Still further, when a new slave station other than those shown in FIG. 1 is provided, connection is made so that, for example, one of the optical fibers in the optical transmission path 200 is branched by a newly-provided optical branching unit and one end of the branched optical fiber is connected to the new slave station.

Still further, in the first embodiment, the optical transmission path 200 connects the master station 400 and the slave stations to each other to form a bus connection. Alternatively, an (N x 1) optical branching unit can by used for star connection. FIG. 3 is an illustration showing the structure of the optical transmission path 200 when the master station 400 and the slave stations are connected to form a star connection. An (N x 1) optical branching unit 203 distributes a downstream optical signal from the master station 400 connected to one end of the optical fiber 201a to each slave station, and also transmits an upstream optical signal from the slave stations to the master station 400. Also with this connection, a single optical fiber can be shared between the upstream system and the downstream system. Therefore, the need for providing an additional optical fiber can be eliminated, and the number of maintenance operations can be reduced.

### (Other examples of structure of the optical passive units)

The optical passive units 405 and 505 are not restricted to optical circulators. Here, only the optical passive unit 505 is described for example. FIG. 4 is a block diagram illustrating another structure of the optical passive unit 505 using a wavelength-division-multiplexing (hereinafter, WDM) coupler. Note that the optical passive unit 405 can also have a structure similar to the above.

In FIG. 4, the optical passive unit 505 is structured by a WDM coupler having three ports Pw1, Pw2, and Pw3. The port Pw1 is connected to the electrical-optical converter 503. The port Pw2 is connected to the optical fiber 201b. The port Pw3 is connected to the optical-electrical converter 504.

When such a WDM coupler is employed as the optical passive unit 505, the wavelength band of the optical signal output from the electrical-optical converter 403 (hereinafter, a downstream optical signal) should be different from that of the optical signal output from the electrical-optical converter 503 (hereinafter, an upstream optical signal). Here, it is assumed that the wavelength of the optical signal output from the electrical-optical converter 403 is λ1, and the wavelength of the optical signal output from the electrical-optical converter 503 is λ2.

Also, it is assumed that the optical branching units 202a and 202b have approximately the same branching ratio of the optical signal having the wavelength of λ1 with respect to the optical signal having the wavelength of λ2.

In the optical passive unit 505, the optical signal having the wavelength of λ2 supplied to the port Pw1 is output not from the port Pw3 but from the port Pw2. The optical signal having the wavelength of λ1 supplied to the port Pw2 is output not from the port Pw1 but from the port Pw3.

As described above, when WDM couplers are employed as the optical passive units 405 and 505, it is preferable that the wavelength band of the downstream optical signal output from the electrical-optical converter 403 be set to be a wavelength band in which the amount of wavelength dispersion occurring on the optical transmission path 200 is small, while the wavelength band of the upstream optical signal output from the electrical-optical converter 503 be set to be a wavelength band in which the amount of wavelength dispersion occurring on the optical transmission path 200 is large. For instance, when the optical transmission path 200 is implemented by a 1.3-µm-band zero dispersion single mode fiber, the wavelength band of the downstream optical signal is set to be a 1.3-µm band, while that of the upstream optical signal is set to be a 1.55-µm band. With the wavelength bands being thus set as above, the downstream electrical signal after optical transmission less suffers from transmission distortion that occurs due to wavelength dispersion on the optical fiber. By contrast, the upstream electrical signal more suffers from such transmission distortion. However, this does not pose any substantial problem because of the following reason.

In the mobile communications system, the downstream electrical signal is destined to a plurality of portable terminals 600. Therefore, the master station 400 has to send a plurality of sub-carrier signals, thereby increasing the number of signals. By contrast, upstream electric signals are supplied only from portable terminals 600 located within an area covered by the master station 400. Therefore, the number of signals transmitted from each slave stations is relatively small. For this reason, even if the wavelength band of the upstream optical signal is set to be large, the number of upstream electrical signals after optical transmission that are supposed to suffer from wavelength dispersion on the optical fiber is small. Accordingly, overall degradation to be suffered is small.

As such, the wavelength band of the downstream optical signal is set to be a wavelength band in which wavelength dispersion on the optical fiber is small, while the wavelength band of the upstream optical signal is set to be a wavelength band in which such wavelength dispersion is large. With this, it is possible to provide a bi-directional optical transmission system capable of reducing influences of degradation in transmission quality due to wavelength dispersion on the optical fiber for both upstream and downstream systems.

### (Second Embodiment)

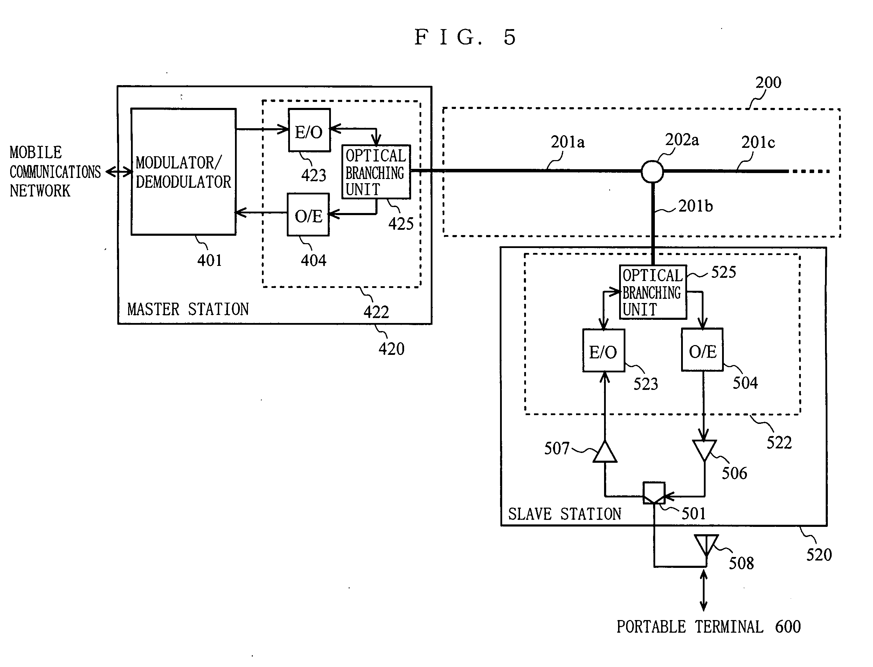

FIG. 5 is a block diagram illustrating the configuration of a bi-directional optical transmission system according to a second embodiment of the present invention. Note that, although only a single slave station 520 is illustrated in FIG. 5, the system can include two or more slave stations. Also note that components similar to those in the first embodiment are provided with the same reference numerals, and are not described herein.

In FIG. 5, the bi-directional optical transmission system includes a master station 420, the slave station 520, and the optical transmission path 200. The master station 420 includes the modulator/demodulator 401 and an optical transmitter/receiver 422. The optical transmitter/receiver 422 includes an electrical-optical converter 423, the optical-electrical converter 404, and an optical branching unit 425.

The ratio of branching at the optical branching unit 425 is approximately 50:50. The optical branching unit 425 forwards an optical signal from the electrical-optical converter 423 not to the optical-electrical converter 404 but to the optical fiber 201a. Also, the optical branching unit 425 forwards an optical signal from the optical the optical fiber 201a to the electrical-optical converter 423 and the optical-electrical converter 404 at approximately the same power. As with the optical passive unit in the first embodiment, the optical branching unit 425 is an optical exchange element.

The electrical-optical converter 423 is similar in function to the electrical-optical converter 403 in the first embodiment, except that the wavelength band of an output optical signal is different from the wavelength band of an optical signal output from an electrical-optical converter 523 of the slave station 520.

The slave station 520 includes an optical transmitter/receiver 522, the duplexer 501, the power amplifier 506, the low-noise amplifier 507, the antenna 508. The optical transmitter/receiver 522 includes an optical branching unit 525, the electrical-optical converter 523, and the optical-electrical converter 504.

The ratio of branching at the optical branching unit 525 is approximately 50:50. The optical branching unit 525 forwards an optical signal from the optical fiber 201b to the electrical-optical converter 523 and the optical-electrical converter 504 at approximately the same power.

The electrical-optical converter 523 is similar in function to the electrical-optical converter 403 in the first embodiment, except that the wavelength band of an output signal is different from the wavelength band of an optical signal output from the electrical-optical converter 423 of the master station 420.

In downstream signal transmission, a downstream optical signal output from the electrical-optical converter 423 of the master station 420 is supplied via the optical branching unit 425 and the optical transmission path 200 to the optical branching unit 525 of the slave station 520. The downstream optical signal is branched by the downstream branching unit 525 into two optical signals, one being supplied to the optical-electrical converter 504 and the other being supplied to the electrical-optical converter 523. The one of the optical signals that is supplied to the optical-electrical converter 504 is converted into a downstream electrical signal, and is eventually emitted from the antenna 508 as an electric wave, as with the first embodiment. The other one of optical signals that is supplied to the electrical-optical converter 523 is given to a light source therein. Here, the wavelength band of the downstream optical signal output from the electrical-optical converter 423 is different from the wavelength band of the optical signal output from the electrical-optical converter 523. Therefore, the downstream optical signal hardly has an influence upon a light-emitting operation of the light source of the electrical-optical converter 523.

Similarly, for upstream signal transmission, an upstream optical signal is supplied to the electrical-optical converter 423. Here, since the upstream optical signal and the downstream optical signal are different from each other in wavelength band, the upstream optical signal hardly has an influence upon the operation of the electrical-optical converter 423.

As such, in the second embodiment, optical branching units are used instead of optical circulators or WDM couplers. Since optical branching units are reasonable in price compared with optical circulators or WDM couplers, it is possible to provide a bi-directional optical transmission system at low cost.

In the present embodiment, the ratio of branching at the (2x1) branching units is approximately 50:50. This is not meant to be restrictive. Furthermore, the number of terminals at each (2x1,) branching unit is not restricted to be three, but may be four or more.

### (Third Embodiment)

In general, when optical signals having the same wavelength band are supplied to a light source of an electrical-optical converter, the state of oscillation at the light source is disturbed, which causes noise to occur. Therefore, in the above-described bi-directional optical transmission system according to the second embodiment, the wavelength of the downstream optical signal is made different from the wavelength of the upstream optical signal. By contrast, in a third embodiment, the wavelengths of the downstream and upstream optical signals are made the same even with the use of optical branching units.

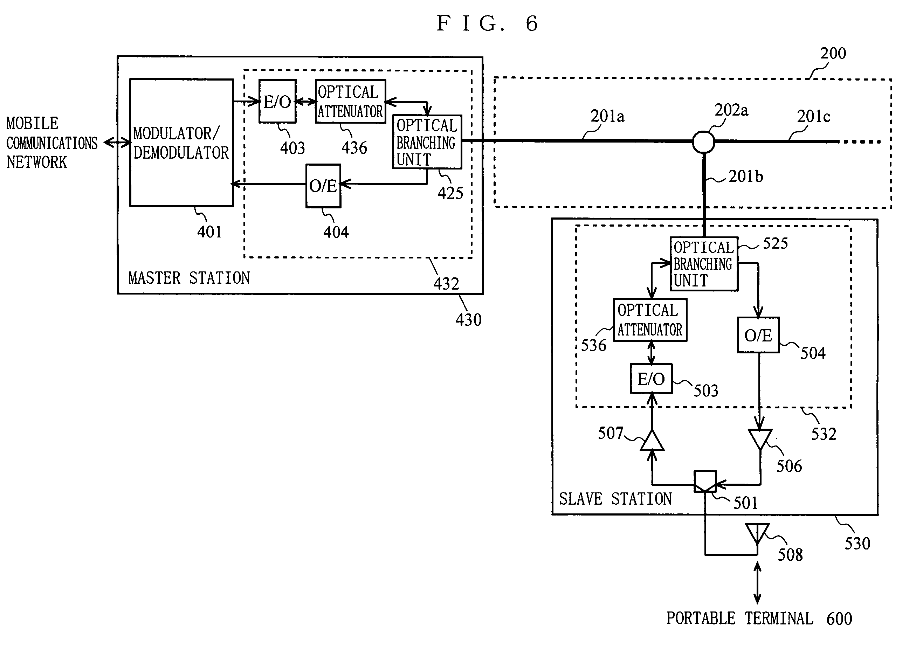

FIG. 6 is a block diagram illustrating the configuration of a bi-directional optical transmission system according to the third embodiment of the present invention. Note that, although only a single slave station 530 is illustrated in FIG. 6, the system can include two or more slave stations. Also note that components similar to those in the first and second embodiments are provided with the same reference numerals, and are not described herein.

In FIG. 6, the bi-directional optical transmission system includes a master station 430, the slave station 530, and the optical transmission path 200. The master station 430 includes an optical transmitter/receiver 432 and the modulator/demodulator 401. The optical transmitter/receiver 432 includes an optical attenuator 436, the optical branching unit 425, the electrical-optical converter 403, and the optical-electrical converter 404.

The optical attenuator 436 attenuates an optical signal supplied by the electrical-optical converter 403 at a predetermined ratio (hereinafter referred to as an attenuation ratio) for output to the optical branching unit 425. The optical attenuator 436 also attenuates an optical signal forwarded from the optical branching unit 425 at the attenuation ratio for output to the electrical-optical converter 403. The attenuation ratio of the optical attenuator 436 will be described further below.

The optical branching unit 425 outputs an optical signal from the optical attenuator 436 to the optical fiber 201a. Also, the optical branching unit 425 outputs an optical signal from the optical fiber 201a to the optical attenuator 436 and the optical-electrical converter 404 at approximately the same power.

The slave station 530 includes an optical transmitter/receiver 532, the duplexer 501, the power amplifier 506, the low-noise amplifier 507, and the antenna 508. The optical transmitter/receiver 532 includes an optical attenuator 536, the optical branching unit 525, the electrical-optical converter 503, and the optical-electrical converter 504.

The optical attenuator 536 attenuates an optical signal supplied by the electrical-optical converter 503 at a predetermined attenuation ratio for output to the optical branching unit 525. Also, the optical attenuator 536 attenuates an optical signal forwarded by the optical branching unit 525 at the attenuation ratio for output to the electrical-optical converter 503.

The optical branching unit 525 forwards the optical signal supplied by the optical attenuator 536 to the optical fiber 201b. Also, the optical branching unit 525 forwards the optical signal from the optical fiber 201b to the optical attenuator 536 and the optical-electrical converter 504 at approximately the same power.

The wavelength bands of the optical signals output from the electrical-optical converters 403 and 503 are equal to each other.

The operation of transmitting a downstream optical signal is described below. A downstream optical signal output from the electrical-optical converter 403 is attenuated by the optical attenuator 436 at the attenuation ratio for output to the optical branching unit 425. The optical signal supplied to the optical branching unit 425 is supplied to the optical branching unit 525 of the slave station 530 via the optical transmission path 200. The optical branching unit 525 branches the optical signal from the optical transmission path 200 into two optical signals, one being supplied to the optical-electrical converter 504 and the other being supplied to the optical attenuator 536. The optical signal supplied to the optical-electrical converter 504 is converted into a downstream electrical signal in a manner similar to that of the first embodiment.

The optical signal supplied to the optical attenuator 536 is attenuated at the attenuation ratio, and is supplied to the electrical-optical converter 503. The downstream optical signal supplied to the electrical-optical converter 503 has a wavelength band equal to the optical signal output from the light source of the electrical-optical converter 503, but has been attenuated in power compared with the optical signal output from the light source. Therefore, noise hardly occurs at the electrical-optical converter 503.

In upstream optical signal transmission, an upstream optical signal is supplied to the electrical-optical converter 403. Since this upstream optical signal has been sufficiently attenuated, noise hardly occurs at the electrical-optical converter 403.

How the attenuation ratios of the optical attenuators 436 and 536 should be determined is described below.

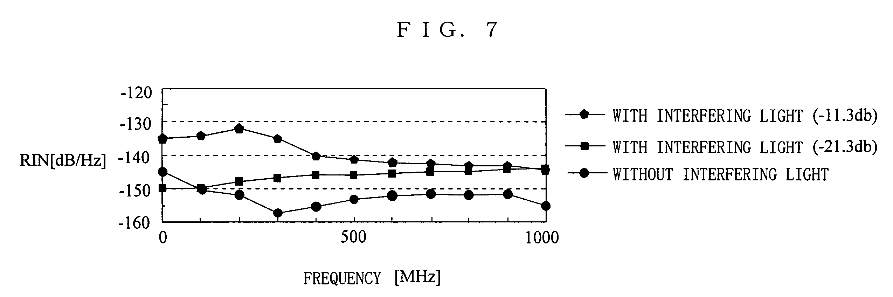

Our experiment has shown that the occurrence of noise at the semiconductor laser can be significantly suppressed if a ratio of the input optical signal power of the semiconductor laser with respect to the output optical signal power thereof is -20dB or lower. FIG. 7 is an illustration showing experimental results obtained by measuring a frequency distribution of relative intensity noise (RIN) in an optical signal emitted from a first semiconductor laser when the first semiconductor laser is supplied by a second semiconductor laser with light having the same wavelength as that of light being emitted from the first semiconductor laser.

In this experiment, the oscillation wavelength of the first and second semiconductor lasers was a 1. 3µm band. The first semiconductor laser emitting light was supplied with an optical signal from the externally-provided second semiconductor laser. Under such circumstances, a frequency distribution of relative intensity noise (RIN) was measured in a state of "without interfering light", a state of "with interfering light (-11.3dB)", and a state of "with interfering light (-21.3dB)".

The state of "without interfering light" is a state in which no optical signal is supplied from the second semiconductor laser to the first semiconductor laser. The state of "with interfering light (-11.3dB)" is a state in which an optical signal is supplied from the second semiconductor laser to the first semiconductor laser, and a ratio of the optical signal power of the second semiconductor laser with respect to the optical signal power of the first semiconductor laser is -11.3dB. The state of "with interfering light (-21.3dB)" is a state in which an optical signal is supplied from the second semiconductor laser to the first semiconductor laser, and a ratio of the optical signal power of the second semiconductor laser with respect to the optical signal power of the first semiconductor laser is -21.3dB.

As can been seen from the experiment results illustrated in FIG. 7, in the state of "with interfering light (-21.3dB)", noise is significantly lowered in a range of 0 to 1000MHz compared with the state of "with interfering light (-11.3dB)", although noise is not lowered enough to a level in the case of "without interfering light". That is, the occurrence of noise can be significantly suppressed if the ratio of the optical signal power of the second semiconductor laser with respect to that of the first semiconductor laser is -21.3dB or lower. Furthermore, it has been empirically known that the relative intensity noise (RIN) of -140 [dB/Hz] or lower does not affect the quality of the transmission path. Therefore, it can be assumed that noise becomes significantly reduced even in the case of "with interfering light (-20dB)".

With the above experiment results, the attenuation ratio of the optical attenuator 436 is determined so that the ratio of'the optical power of the upstream optical signals being joined from the slave stations with respect to the optical power of the optical signal output from the light source of the electrical-optical converter 403 becomes -20dB or lower. Furthermore, the attenuation ratio of the optical attenuator 536 is determined so that the ratio of the optical power of the downstream optical signal from the master station with respect to the optical power of the optical signal output from the light source of the electrical-optical converter 503 becomes -20dB or lower. In order to determine the attenuation ratio, attenuation on the optical transmission path 200 also has to be considered. For consideration of such attenuation, the upstream and downstream optical powers are actually measured when the master station 430 and the slave stations are placed.

As such, the powers of the optical signals supplied to the electrical-optical converters 403 and 503 are attenuated. With this, it is possible to provide a bi-directional optical transmission system capable of suppressing noise that occurs due to an input of interfering light to a light source, even with the use of upstream and downstream optical signals having the same wavelength band and of optical branching units employed in a master station and slave stations.

Also, the wavelengths of the upstream and downstream signals do not have to be restricted to those differing from each other. Thus, it is possible to provide a bi-directional optical transmission system at lower cost.

Furthermore, optical branching units are reasonable in price compared with optical circulators or WDM couplers. Thus, it is possible to provide a bi-directional optical transmission system at lower cost.

Still further, the optical attenuator may be placed only in the master station, or may be placed only in each of the slave stations. Either case will suffice as long as the attenuation ratio of the optical attenuator is set in the above-described manner so that noise does not occur.

Still further, no optical attenuators are required in the master station and the slave station in the following exemplary case: many (twenty, for example) optical branching units are provided, wherein a ratio of the downstream optical power supplied to each slave station with respect to the optical signal power output from the light source of each slave station is -20dB or lower, and a ratio of the power of upstream signals joined to the master station with respect to the optical signal power output from the light source of the master station is -20dB or lower. In such a case, the occurrence of noise at the light sources can be suppressed without using optical attenuators.

### (Fourth Embodiment)

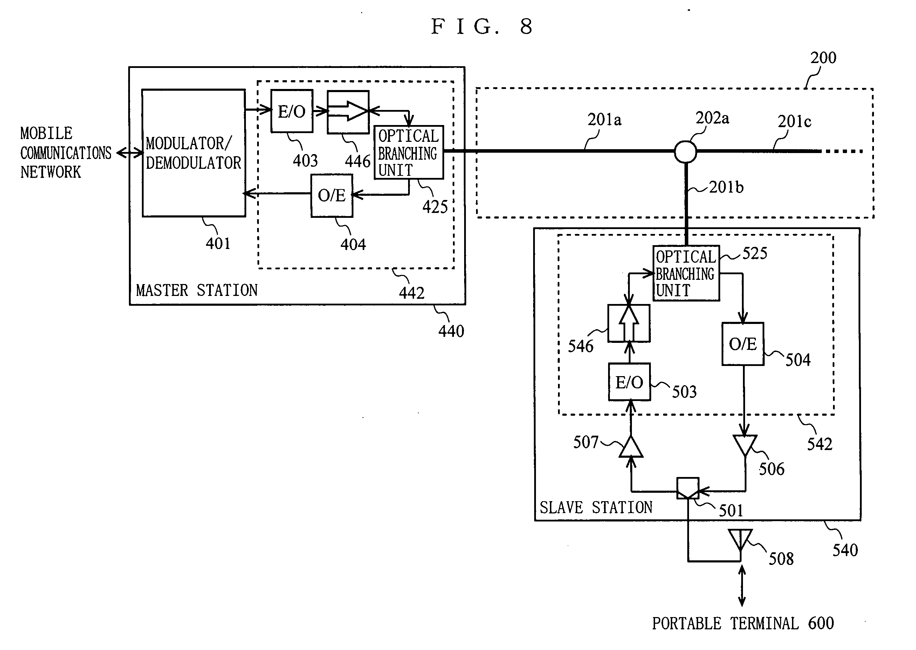

FIG. 8 is a block diagram illustrating the configuration of a bi-directional optical transmission system according to a fourth embodiment of the present invention. Note that, although only a single slave station 540 is illustrated in FIG. 8, the system can include two or more slave stations. Also note that components similar to those in the first or second embodiment are provided with the same reference numerals, and are not described herein.

In FIG. 8, the bi-directional optical transmission system includes a master station 440, the slave station 540, and the optical transmission path 200. The master station 440 includes the modulator/demodulator 401 and an optical transmitter/receiver 442. The optical transmitter/receiver 442 includes an optical isolator 446, the optical branching unit 425, the electrical-optical converter 403, and the optical-electrical converter 404.

The optical isolator 446 allows an optical signal output from the electrical-optical converter 403 to pass through, but disperses an optical signal from the optical branching unit 425 so as not to allow the same to pass through. An isolation of the optical isolator 446 is -20dB or lower based on a reason similar to that applied to the attenuation ratio of each of the optical attenuators in the third embodiment. The isolation of the optical isolator 446 can be determined in consideration of optical loss on the optical transmission path 200.

The slave station 540 includes an optical transmitter/receiver 542, the low-noise amplifier 507, the power amplifier 506, the duplexer 501, and the antenna 508. The optical transmitter/receiver 542 includes an optical isolator 546, the optical branching unit 525, the electrical-optical converter 503, and the optical-electrical converter 504.

The optical isolator 546 allows an optical signal output from the electrical-optical converter 503 to pass through, but disperses an optical signal output from the optical branching unit 525 so as not to allow the same to pass through. An isolation of the optical isolator 546 is -20dB or lower.

The wavelength band of an optical signal output from the electrical-optical converter 403 is equal to the wavelength band of an optical signal output from the electrical-optical converter 503.

The operations of transmitting a downstream optical signal and an upstream signal are similar to those in the third embodiment, and are not described herein.

As described above, in the fourth embodiment, optical isolators and optical branching units are used. Since optical isolators and optical branching units are reasonable in price compared with optical circulators and WDM couplers, it is possible to provide a bi-directional optical transmission system at lower cost.

Also, the optical isolator interrupts an upstream or downstream optical signal so as to prevent interfering light from being input thereto, thereby suppressing the occurrence of noise. This removes restrictions regarding the wavelength band. Therefore, it is possible to provide a bi-directional optical transmission system at further lower cost.

### (Fifth Embodiment)

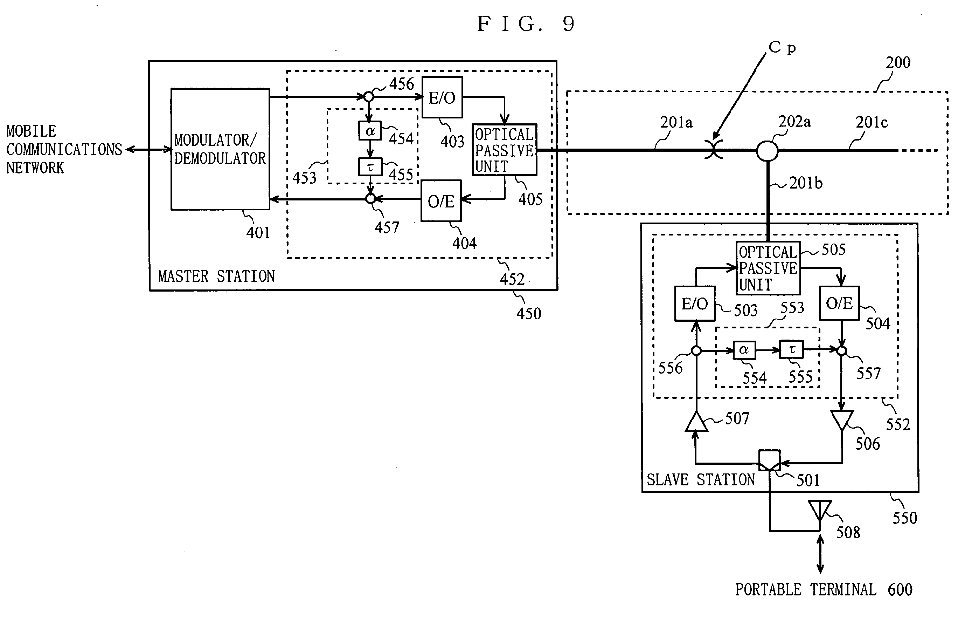

FIG. 9 is a block diagram illustrating the configuration of a bi-direction optical transmission system according to a fifth embodiment of the present invention. Note that, although only a single slave station 550 is illustrated in FIG. 9, the system can include two or more slave stations. Also note that components similar to those in the first embodiment are provided with the same reference numerals, and are not described herein.

In FIG. 9, the bi-directional optical transmission system includes a master station 450, the optical transmission path 200, and the slave station 550. The master station 450 includes the modulator/demodulator 401 and an optical transmitter/receiver 452. The optical transmitter/receiver 452 includes a canceling circuit 453, a signal distributor 456, a combiner 457, the electrical-optical converter 403, the optical-electrical converter 404, and the optical passive unit 405. The canceling circuit 453 includes a signal level adjusting circuit (denoted as "α" in FIG. 9) 454 and a delay adjusting circuit (denoted as "τ" in FIG. 9) 455.

The signal distributor 456 distributes a downstream electrical signal output from the modulator/demodulator 401 into two signals, one being supplied to the electrical-optical converter 403 and the other being supplied to the signal level adjusting circuit 454. The signal level adjusting circuit 454 attenuates or amplifies the amplitude of the downstream electrical signal supplied by the signal distributor 456 based on a predetermined amplification value, and then outputs the resultant signal to the delay adjusting circuit 455. The amplitude value of the electrical signal is predetermined before the bi-directional optical transmission system is constructed so that an S/N ratio of the upstream electrical signal output from the optical-electrical converter 404 becomes high. The amplitude value predetermined in the signal level adjusting circuit 454 can also be finely adjusted after the construction of the system.

The delay adjusting circuit 455 performs a time delaying process based on a predetermined amount of delay to adjust the phase of a downstream electrical signal supplied by the signal level adjusting circuit 454, and then outputs the adjusted signal to the combiner 457. The combiner 457 combines an electrical signal from the delay adjusting circuit 455 and an electrical signal from the optical-electrical converter 404 together for output to the modulator/demodulator 401.

The slave station 550 includes an optical transmitter/receiver 522, the duplexer 501, the power amplifier 506, the low-noise amplifier 507, and the antenna 508. The optical transmitter/receiver 552 includes a canceling circuit 553, a signal distributor 556, a combiner 557, the electrical-optical converter 503, the optical-electrical converter 504, and the optical passive unit 505. The canceling circuit 553 includes a signal level adjusting circuit 554 and a delay adjusting circuit 555.

The signal distributor 556 distributes an upstream electrical signal output from the low-noise amplifier 507 into two signals, one being supplied to the electrical-optical converter 503 and the other being supplied to the signal level adjusting circuit 554. The signal level adjusting circuit 554 attenuates or amplifies the upstream electrical signal from the signal distributor 556 based on a predetermined amplification value, and then outputs the resultant signal to the delay adjusting circuit 555. The signal value is predetermined before the system is constructed so that an S/N ratio of a downstream electrical signal output from the optical-electrical converter 504 becomes high. The amplification value can also be finely adjusted after the construction of the system.

The delay adjusting circuit 555 performs a time delaying process based on a predetermined amount of delay to adjust the phase of an upstream electrical signal supplied by the signal level adjusting circuit 554, and then outputs the adjusted signal to the combiner 557. The combiner 557 combines an electrical signal from the delay adjusting circuit 555 and an electrical signal from the optical-electrical converter 504 together for output to the power amplifier 506.

Effects obtained by providing the canceling circuits 453 and 553 are described below. Now, it is assumed that light reflection occurs at a connecting point Cp on the optical transmission path 200. In this case, the downstream optical signal output from the master station 450 is propagated through the optical transmission path 200 to the slave station 550, with part of optical power reflected at the connecting point Cp. The light reflected at the connecting point Cp passes through the optical passive unit 405 to enter the optical-electrical converter 404 for conversion into an electrical signal.

If the canceling circuit 453 is not provided, the electrical signal generated from the reflected light is combined with the upstream electrical signal supplied by the slave station 550, and is then given to the modulator/demodulator 401. This interferes with the original upstream electrical signal from the slave station 550.

By contrast, with the canceling circuit 453 being provided, an electrical signal can be provided which is equal in signal intensity and opposite in phase to the electrical signal generated from the reflected light supplied by the optical-electrical converter 404. Such electrical signal output from the canceling circuit 453 and the electrical signal generated from the reflected light are added together to be cancelled with each other.

Similarly, the canceling circuit 553 provided to the slave station 550 can also cancel the reflected light of the upstream optical signal output from the electrical-optical converter 503.

With this, it is possible to prevent degradation in the quality of the original upstream electrical signal supplied by the slave station 550. Also, it is possible to prevent degradation in the quality of the original downstream electrical signal supplied by the master station 450.

In the fifth embodiment, the optical transmission path 200 has a connecting point. Alternatively, the canceling circuit 453 operates similarly even when part of the optical signal from the electrical-optical converter 403 leaks out from the optical passive unit 405 to the optical-electrical converter 404. The same goes for the canceling circuit 553.

In the fifth embodiment, the amplification value in the signal level adjusting circuit and the amount of delay in the delay adjusting circuit are previously set. Alternatively, the amplitude value and the amount of delay may be automatically determined in the following manner. In the master station, the upstream electrical signal combined with the electrical signal generated from the reflected light is fed back to the canceling circuit, where a filter or the like extracts only the electrical signal generated from the reflected light so as to detect the intensity and phase of the extracted electrical signal. Based on the detected intensity and phase, the amplitude value and the amount of delay are automatically determined. With this, it is possible to automatically prevent degradation in the quality of the upstream or downstream electrical signal.

### (Sixth Embodiment)

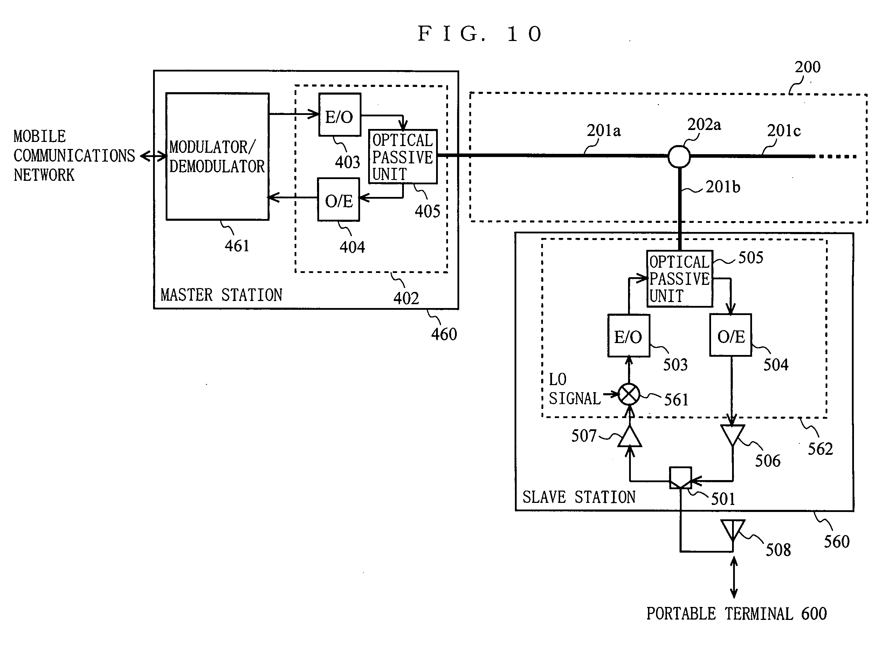

FIG. 10 is a block diagram illustrating a bi-directional optical transmission system according to a sixth embodiment of the present invention. Note that, although only a single slave station 560 is illustrated in FIG. 10, the system can include two or more slave stations. Also note that components similar to those in the first embodiment are provided with the same reference numerals, and are not described herein.

In FIG. 10, the bi-directional optical transmission system includes a master station 460, the slave station 560, and the optical transmission path 200. The slave station 560 includes an optical transmitter/receiver 562, the duplexer 501, the power amplifier 506, the low-noise amplifier 507, and the antenna 508. The optical transmitter/receiver 562 includes a mixer 561, the electrical-optical converter 503, the optical-electrical converter 504, and the optical passive unit 505.

The mixer 561 mixes the upstream electrical signal output from the low-noise amplifier 507 with an LO signal (local oscillation signal) for frequency conversion, and then supplies the resultant signal to the electrical-optical converter 503. This resultant signal after frequency conversion is hereinafter referred to as an upstream intermediate frequency signal.

The master station 460 includes a modulator/demodulator 461 and the optical transmitter/receiver 402. The modulator/demodulator 461 frequency-converts the upstream intermediate frequency signal supplied by the optical-electrical converter 404 into a predetermined frequency band, and then demodulates the frequency-converted signal obtain data from the portable terminal 600, and then sends the data to the mobile communications network.

The operation of transmitting a downstream signal is similar to that in the first embodiment, and therefore is not described herein. The operation of transmitting an upstream signal is described below.

The upstream electrical signal received by the antenna 508 of the slave station 560 is supplied via the duplexer 501 to the low-noise amplifier 507 for amplification, and is then supplied to the mixer 561. The mixer 561 mixes the received upstream electrical signal with an LO signal for frequency conversion, and outputs the resultant signal as an upstream intermediate frequency signal to the electrical-optical converter 503. The electrical-optical converter 503 intensity-modulates an optical signal output from a light source with the received upstream intermediate frequency signal, and then supplies the resultant optical signal to the optical passive unit 505. The optical signal supplied to the optical passive unit 505 is forwarded via the optical transmission path 200 to the optical passive unit 405 of the master station 460. The optical passive unit 405 forwards the received optical signal to the optical-electrical converter 404. The optical-electrical converter 404 converts the received optical signal to an upstream intermediate frequency signal for output to the modulator/demodulator 461. The modulator/demodulator 461 frequency-converts the received upstream intermediate frequency signal to a predetermined frequency band, demodulates the frequency-converted signal to obtain data from the portable terminal 600, and then sends the data to the mobile communications network.

As such, in the bi-directional optical transmission system according to the sixth embodiment, the frequency band of the downstream electrical signal is different from the frequency band of the upstream intermediate frequency signal. Therefore, it is possible to reduce interference of the downstream electrical signal to the upstream intermediate frequency signal or vice versa at the master station 460 or the slave station 560.

Alternatively, the modulator/demodulator 461 may demodulate the received upstream intermediate frequency signal without frequency conversion.

### (Seventh Embodiment)

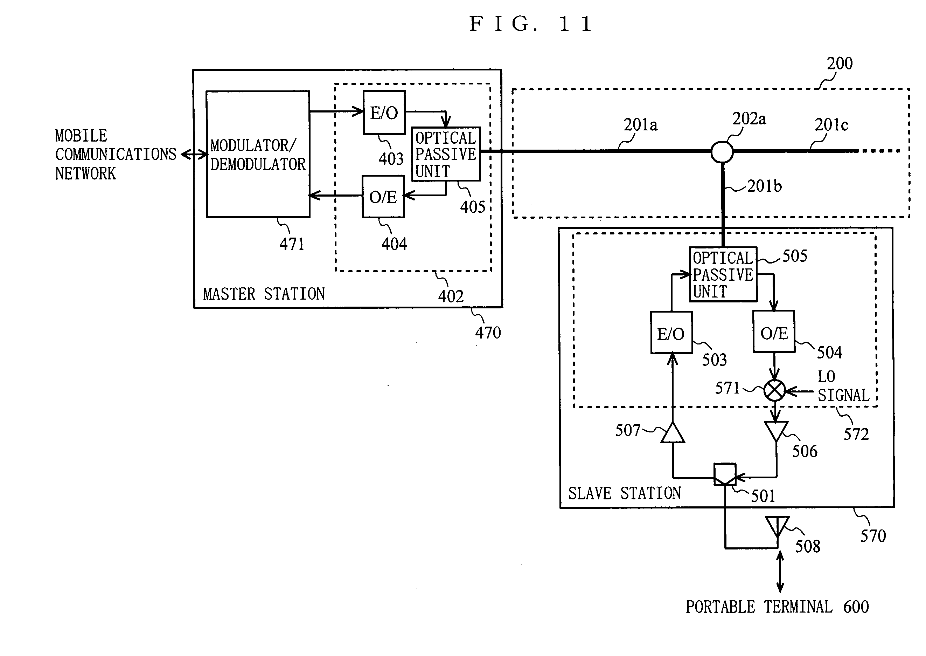

FIG. 11 is a block diagram illustrating the configuration of a bi-direction optical transmission system according to a seventh embodiment of the present invention. Note that, although only a single slave station 570 is illustrated in FIG. 11, the system can include two or more slave stations. Also note that components similar to those in the first embodiment are provided with the same reference numerals, and are not described herein.

In FIG. 11, the bi-directional optical transmission system includes a master station 470, the slave station 570, and the optical transmission path 200. The master station 470 includes a modulator/demodulator 471 and the optical transmitter/receiver 402. The modulator/demodulator 471 modulates a carrier signal with data supplied by a mobile communications network for conversion to an intermediate frequency signal, and then supplies the intermediate frequency signal to the electrical-optical converter 403. This intermediate frequency signal is hereinafter referred to as a downstream intermediate frequency signal.

The slave station 540 includes an optical transmitter/receiver 572, the duplexer 501, the power amplifier 506, the low-noise amplifier 507, and the antenna 508. The optical transmitter/receiver 572 includes a mixer 571, the electrical-optical converter 503, the optical-electrical converter 504, and the optical passive unit 505.

The mixer 571 mixes the downstream intermediate frequency signal supplied by the optical-electrical converter 504 with an LO signal for frequency conversion, and then supplies the resultant signal to the power amplifier 506. The signal supplied by the mixer 571 is hereinafter referred to as a radio frequency signal. The radio frequency signal is in a frequency band receivable by the portable terminal 600

The operation of transmitting an upstream signal is similar to that in the first embodiment, and therefore is not described herein. The operation of transmitting a downstream signal is described below.

The modulator/demodulator 471 modulates a carrier signal with data supplied by the mobile communications network for conversion to a downstream intermediate frequency signal, and then supplies the downstream intermediate frequency signal to the electrical-optical converter 403. The electrical-optical converter 403 intensity-modulates an optical signal output from a light source with the received downstream intermediate frequency signal, and then supplies the intensity-modulated optical signal to the optical passive unit 405. The optical signal supplied to the optical passive unit 405 is forwarded via the optical transmission path 200 to the optical passive unit 505 of the slave station 570. The optical passive unit 505 forwards the received optical signal to the optical-electrical converter 504. The optical-electrical converter 504 converts the received optical signal to a downstream intermediate frequency signal for output to the mixer 571. The mixer 571 mixes the downstream intermediate frequency signal with an LO signal for frequency conversion to a radio frequency signal, and then supplies the radio frequency signal to the power amplifier 506. The radio frequency signal supplied to the power amplifier 506 is amplified therein, forwarded to the duplexer 501, and is then emitted from the antenna 508 into space.

As such, in the bi-directional optical transmission system according to the seventh embodiment, the frequency band of the upstream electrical signal is different from the frequency band of the downstream intermediate frequency signal. Therefore, it is possible to reduce interference of the upstream electrical signal to the downstream intermediate frequency signal or vice versa at the master station 470 or the slave station 570.

In the sixth and seventh embodiments, either one of the upstream system and the downstream system uses an intermediate frequency signal. Alternatively, both of the upstream and downstream systems may use intermediate frequency signals.

### (Eighth Embodiment)

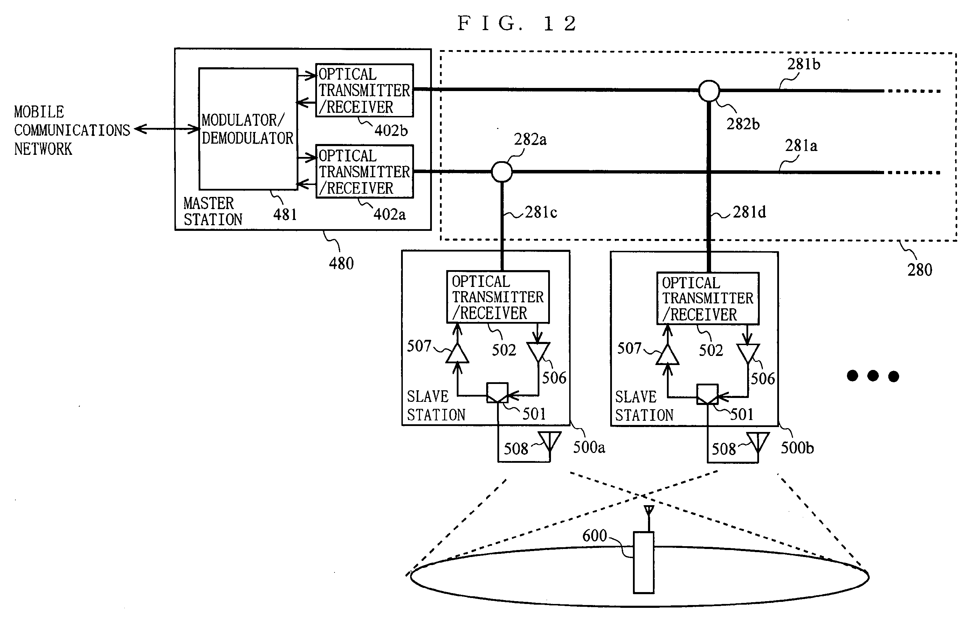

FIG. 12 is a block diagram illustrating the configuration of a bi-directional optical transmission system according to an eighth embodiment of the present invention. Note that, although two slave stations are illustrated in FIG. 12, the system can include three or more slave stations. Also note that components similar to those in the first embodiment are provided with the same reference numerals, and are not described herein. In the eighth embodiment, space diversity is achieved.

In FIG. 12, the bi-directional optical transmission system includes a master station 480, slave stations 500a and 500b, and an optical transmission path 280. The master station 480 includes a modulator/demodulator 481 and optical transmitters/receivers 402a and 402b. The optical transmitters/receivers 402a and 402b are similar in structure to the optical transmitter/receiver 402 of the master station 400 in the first embodiment (refer to FIG. 1). The optical transmitter/receiver 402a is provided correspondingly to the slave station 500a. The optical transmitter/receiver 402b is provided correspondingly to the slave station 500b. The modulator/demodulator 481 modulates a signal from a mobile communications network for output to the optical transmitters/receivers 402a and 402b, and demodulates an electrical signal from the optical transmitter 402a and /or the optical transmitter 402b for transmission to the mobile communications network.

The optical transmission path 280 includes two optical fibers 281a and 281b. The optical fiber 281a is connected to the optical transmitter/receiver 402a, and is branched at an optical branching unit 282a to an optical fiber 281c. One end of the optical fiber 281c is connected to the slave station 500a. The optical fiber 281b is connected to the optical transmitter/receiver 402b, and is branched at an optical branching unit 282b to an optical fiber 281d. One end of the optical fiber 281b is connected to the slave station 500b.

Slave stations not shown are provided so that one slave station connected to the optical fiber 281a and one slave station connected to the optical fiber 281b form a pair. The slave stations forming a pair cover communications areas overlapping each other.

The operation of transmitting a downstream signal is described below. The downstream signal supplied by the mobile communications network is given to the modulator/demodulator 481 for demodulating a carrier signal. The resultant signal is then converted to a downstream electrical signal for output to the optical transmitters/receivers 402a and 402b. The downstream electrical signal supplied to the optical transmitter/receiver 402a is converted to a downstream optical signal for output to the optical fiber 281a. The downstream optical signal is supplied via the optical branching unit 282a to the slave station 500a, is re-converted to a downstream electrical signal, and is then emitted into space as an electric wave.

The downstream electrical signal supplied to the optical transmitter/receiver 402b is converted to a downstream optical signal for output to the optical fiber 281b. The downstream optical signal is supplied via the optical branching unit 282b to the slave station 500b, is re-converted to a downstream electrical signal, and is then emitted into space as an electric wave.

The areas covered by the slave stations 500a and 500b overlap each other. Therefore, the portable terminal 600 can communicate with both of the slave stations 500a and 500b. However, the portable terminal 600 selects either one of the slave stations so as to decode a downstream signal more accurately. Then, the portable terminal 600 receives the downstream signal from the selected slave station.

In upstream signal transmission, the portable terminal 600 transmits an upstream signal to a slave station that can more accurately receive the upstream signal. If the slave station 500a receives the upstream signal, the slave station 500a converts the received upstream electrical signal to an optical signal for output to the optical fiber 281c. The optical signal goes through the optical fiber 281c to enter the optical transmitter/receiver 402a of the master station 480 via the optical fiber 281a. In the optical transmitter/receiver 402a, the optical signal is converted into an upstream electrical signal, and the upstream electrical signal is demodulated for transmission to the mobile communications network.

As such, in the bi-directional optical transmission system according to the eighth embodiment, the portable terminal 600 can communicate with a plurality of slave stations, and actually communicates with a slave station that can most accurately transmit and receive a signal. Therefore, a space diversity system is achieved in which stable communications can be made even when any one of the slave stations becomes incapable of transmitting and receiving a signal accurately. Also, in such a system, the need for providing an additional optical fiber can be eliminated, and the number of maintenance operations can be reduced.

Here, the number of slave stations that cover communications areas overlapping each other is two. Alternatively, three or more slave stations may cover communications areas overlapping each other.

### (Ninth Embodiment)

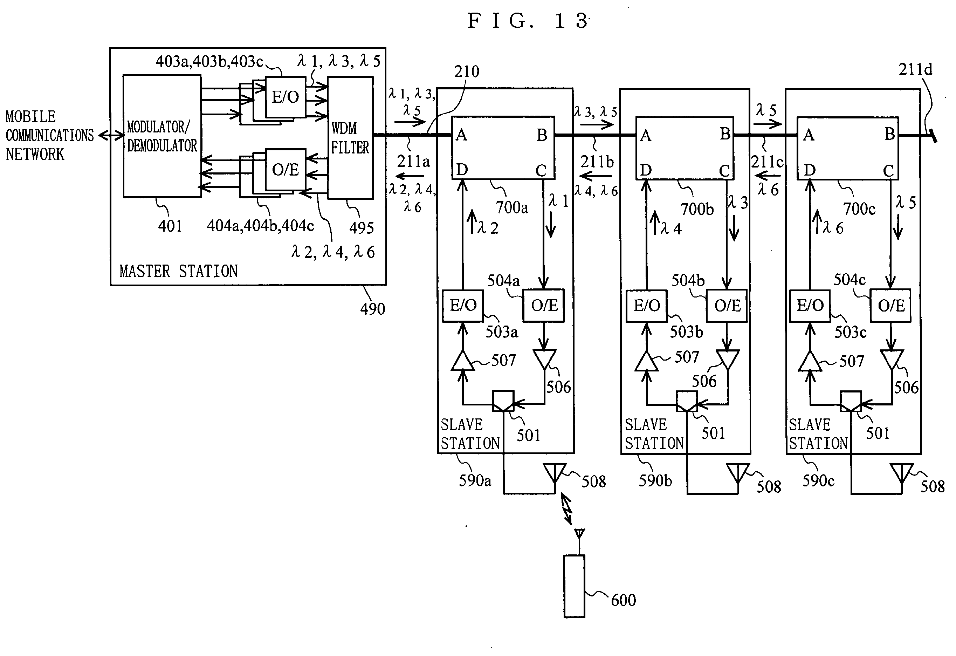

FIG. 13 is a block diagram illustrating the configuration of a bi-directional optical transmission system according to a ninth embodiment of the present invention. In FIG. 13, the bi-directional optical transmission system includes a master station 490, three slave stations 590a, 590b, and 590c, the optical transmission path 210, and the portable terminal 600. The master station 490 and the slave stations are connected to each other via the optical transmission path 210. In FIG. 13, components similar in function to those in the first embodiment are provided with the same reference numerals.

The bi-directional optical transmission system according to the ninth embodiment is different from those according to the first to eighth embodiments in that different optical wavelengths are assigned to the slave stations.

The master station 490 converts an electrical signal coming from a mobile communications network to an optical signal for transmission via the optical transmission path 210 to each slave station. Also, the master station 490 converts an optical signal transmitted from each slave station to an electrical signal for transmission to the mobile communications network.

The portable terminal 600 performs wireless signal transmission to and reception from the slave station within a predetermined area. Each slave station converts an optical signal supplied by the master station 490 to an electrical signal for wireless transmission, and also converts a signal supplied by the portable terminal 600 to an optical signal for transmission via the optical transmission path 210 to the master station 490. Note that the number of slave stations is not restricted to three, and may be two or less or four or more. Also, the number of portable terminals 600 may be two or more.

The master station 490 includes the modulator/demodulator 401, electrical-optical converters 403a, 403b, and 403c, optical-electrical converters 404a, 404b, and 404c, and a wavelength-division-multiplexing filter (hereinafter, WDM filter) 495.

The slave station 590a includes an optical add/drop unit 700a, an electrical-optical converter 503a, an optical-electrical converter 504a, the power amplifier 506, the low-noise amplifier 507, the duplexer 501, and the antenna 508. The slave stations 590b and 590c are the same in structure as the slave station 590a.

The optical transmission path 210 is a single optical fiber.

The optical transmission path 210 includes an optical fiber 211a connecting the WDM filter 495 of the master station 490 and the optical add/drop unit 700a of the slave station 590a together, an optical fiber 211b connecting the optical add/drop unit 700a and an optical add/drop unit 700b of the slave station 590b together, an optical fiber 211c connecting the optical add/drop unit 700b and an optical add/drop unit 700c of the slave station 590c together, and an optical fiber 211d connected to a terminal B of the optical add/drop unit 700c. Each of the optical fibers 211a, 211b, 211c, and 211d is a single optical fiber.

With reference to FIG. 13, the operation of the system is described below.

In FIG. 13, the modulator/demodulator 401 is connected to the mobile communications network for data exchange associated with mobile communications.

A downstream system is first described below.

The modulator/demodulator 401 modulates a carrier signal with data coming from the mobile communications network for conversion to a sub-carrier modulated signal, which is hereinafter referred to as a downstream electrical signal. The downstream electrical signal is given to the electrical-optical converters 403a, 403b, and 403c. Each of these electrical-optical converters 403a, 403b, and 403c intensity-modulates an optical signal output from a light source with the downstream electrical signal, and supplies the intensity-modulated optical signal to the WDM filter 495. The WDM filter 495 wavelength-multiplexes the signals from the electrical-optical converters 403a, 403b, and 403c for output to the optical fiber 211a.

Here, it is assumed that wavelengths of light sources in the electrical-optical converters 403a, 403b, and 403c are λ1, λ3, and λ5, respectively, which are different from one another. The downstream electrical signals supplied from the modulator/demodulator 401 to the electrical-optical converters 403a, 403b, and 403c may be the same or different. Furthermore, in the present embodiment, a direct optical intensity modulation scheme using a semiconductor laser as a light source is described. Alternatively, it is possible to employ an external optical modulation scheme using an external optical modulator supplied with a downstream electrical signal as an input signal.

Three optical signals having wavelengths of λ1, λ3, and λ5, respectively, supplied by the WDM filter 495 are propagated through the optical fiber 211a to the optical add/drop unit 7001 of the slave station 590a. The optical add/drop unit 700a outputs the optical signal having the wavelength of λ1 from a terminal C and the two optical signals having the wavelengths of λ3 and λ5 from a terminal B.

The two optical signals having the wavelengths of λ3 and λ5 output from the terminal B are propagated through the optical fiber 211b to the slave station 590b. The optical add/drop unit 700b in the slave station 590b outputs the optical signal having the wavelength of λ3 from a terminal C, and the optical signal having the wavelength of λ5 from a terminal B.

The optical signal having the wavelength of λ5 output from the terminal B is propagated through the optical fiber 211c to the slave station 590c. The optical add/drop unit 700c in the slave station 590c outputs only the optical signal having the wavelength of λ5 from the terminal B, which is connected to one end of the optical fiber 211d. The other end of the optical fiber 211d may be terminated or open.

The operation of the slave station 590a is described.

The optical signal having the wavelength of λ1 output from the terminal C of the optical add/drop unit 700a enters the optical-electrical converter 504a. The optical-electrical converter 504a converts the received optical signal to a downstream electrical signal. The downstream electrical signal is then amplified by the power amplifier 506, forwarded to the duplexer 501, and is then emitted into space from the antenna 508 . The electric wave emitted into space is received by the portable terminal 600.

Next, an upstream system is described.

It is assumed herein that the electric wave emitted into space from the portable terminal 600 is received by the antenna 508 of the slave station 590a. What is received by the antenna 508 is a sub-carrier modulated signal, which is hereinafter referred to as an upstream electrical signal. The upstream electrical signal is supplied via the duplexer 501 to the low-noise amplifier 507 for amplification, and then is given to the electrical-optical converter 503a. The electrical-optical converter 503a intensity-modulates an optical signal from the light source with the received upstream electrical signal for output. The optical signal output from the electrical-optical converter 503a is given to a terminal D of the optical add/drop unit 700a.

Here, it is assumed that a wavelength of the light source in the electrical-optical converter 503a is λ2. Furthermore, it is assumed that a wavelength of the light source in the electrical-optical converter 503b of the slave station 590b is λ4, and a wavelength of the light source in the electrical-optical converter 503c of the slave station 590c is λ6. The wavelengths of λ2, λ4, and λ6 are different from each other, and are also different from the wavelengths of λ1, λ3, and λ5.

An optical signal having the wavelength of λ6 output from the electrical-optical converter 503c is given to a terminal D of the optical add/drop unit 700c, and then output from a terminal A. The optical signal output from the terminal A of the optical add/drop unit 700c is propagated through the optical fiber 211c to a terminal B of the slave station 590b. In the slave station 590b, an optical signal having the wavelength of λ4 output from the electrical-optical converter 503b is given to a terminal D of the optical add/drop unit 700b. The optical add/drop unit 700b outputs, from its terminal A, an optical signal having the wavelength of λ6 given to the terminal B, along with the optical signal having the wavelength of λ4 given to the terminal D. The two optical signals having the wavelengths of λ4 and λ6, respectively, are propagated through the optical fiber 211b to a terminal B of the slave station 590a.

In the slave station 590a, the optical add/drop unit 700a outputs, from its terminal A, the optical signals having the wavelengths of λ4 and λ6 given to the terminal B, along with an optical signal having the wavelength of λ2 given to a terminal D. The three optical signals having the wavelengths of λ2, λ4 and λ6, respectively, output from the terminal A of the optical add/drop unit 700a are propagated through the optical fiber 211a to the master station 490.

In the master station 490, these three optical signals having the wavelengths of λ2, λ4 and λ6 are supplied to the WDM filter 495 for wavelength demultiplexing, and are then given to the optical-electrical converters 404a, 404b, and 404c, respectively. Each of the optical-electrical converters 404a, 404b, and 404c converts the optical signal to an upstream electrical signal for output to the modulator/demodulator 401. The modulator/demodulator 401 demodulates the received upstream electrical signals to obtain data from the portable terminal 600, and then sends the data to the mobile communications network.

Note that the operation of transmitting and receiving an optical signal and a radio signal in the slave stations 590b and 590c is similar to that in the slave station 590a.

The structure of the optical add/drop unit 700a is described below.

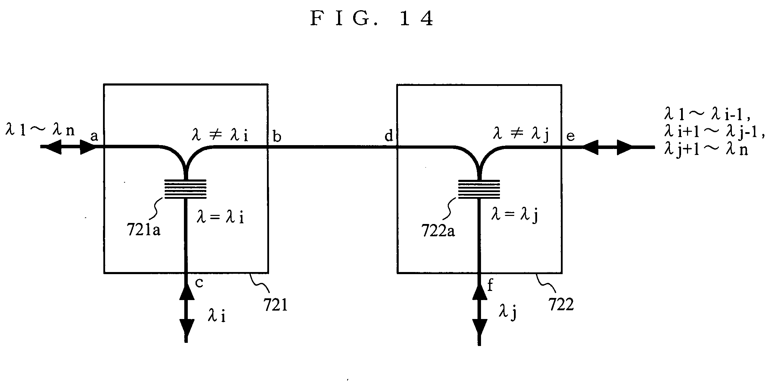

FIG. 14 is an illustration showing the structure of the optical add/drop unit according to the ninth embodiment. Each of the optical add/drop units 700a, 700b, and 700c has the structure as illustrated in FIG. 14.

In FIG. 14, the optical add/drop unit includes two wavelength combining/branching units 721 and 722 connected in series. The wavelength combining/branching unit 721 receives, at a terminal *a*, optical signals having the wavelengths of λ1 to λn, and outputs an optical signal having the wavelength of λi from a terminal c and the other optical signals from a terminal *b*. Also, the wavelength combining/branching unit 721 combines an optical signal having the wavelength of λi received at the terminal *c* and the other optical signals received at the terminal *b* together for output from the terminal *a*. Here, the wavelength combining/branching unit 721 is a bulk-type combining/branching unit structured by a dielectric multilayered-film filter 721a. The dielectric multilayered-film filter 721a allows only light having the wavelength of λi to pass, and reflects the other light.

The wavelength combining/branching unit 722 receives, at a terminal *d,* optical signals having the wavelengths of λ1 to λn (except λi), and outputs an optical signal having the wavelength of λj (j≠i) from a terminal *f* and the other optical signals from a terminal e. Also, the wavelength combining/branching unit 722 combines an optical signal having the wavelength of λj received at the terminal *f* and the other optical signals received at the terminal *e* together for output from the terminal *d.* Here, the wavelength combining/branching unit 722 is a bulk-type combining/branching unit structured by a dielectric multilayered-film filter 722a. The dielectric multilayered-film filter 722a allows only light having the wavelength of λj to pass, and reflects the other light. Note that FIG. 14 merely shows a schematic illustration of how the dielectric multilayered-film filters 721a and 722a and an optical transmission path are arranged, and does not illustrates a practical arrangement. In practice, the dielectric multilayered-film filters 721a and 722a are arranged so that passing and reflected optical signals are coupled to the optical transmission path.

In the optical add/drop unit illustrated in FIG. 14, with λi being assigned to λ2 and λj being assigned to λ1, the optical add/drop unit 700a in the system of FIG. 13 can be provided. Furthermore, with λi being assigned to λ4 and λj being assigned to λ3, the optical add/drop unit 700b can be provided. Still further, with λi being assigned to λ6 and λj being assigned to λ5, the optical add/drop unit 700b can be provided. Note that the optical add/drop unit 700a can also be provided with λi being assigned to λ1 and λj being assigned to λ2. The same goes for λ3 to λ6.

In the above-described manner, the mobile communications network and the portable terminal 600 can communicate with each other via the bi-directional optical transmission system according to the ninth embodiment.

As such, according to the bi-directional optical transmission system according to the ninth embodiment, the slave stations have different wavelengths assigned thereto for wavelength multiplexing, and optical add/drop units are used for extracting an optical signal relevant to each slave station. Therefore, a single optical fiber can be shared between the upstream and downstream systems. With this, the need for providing an additional optical fiber can be eliminated, and the number of maintenance operations can be reduced.

Furthermore, with the use of the optical add/drop unit as illustrated in FIG. 14, loss of the optical signal extracted at the slave station side (for example, the optical signal having the wavelength of λ1) is smaller compared with a case of using an optical branching unit or the like. Therefore, higher performance communications can be achieved.

Here, each of the wavelength combining/branching units 721 and 722 can be a unit of two fibers fused together, a unit using a wavelength selecting board, a unit using a fiber grating, or a unit using an optical waveguide.

Still further, the WDM filter 495 may be structured by a combination of a plurality of wavelength combining/branching units 721 having different wavelengths.

Still further, the wavelengths λ1 through λ6 may comply with the international standard ITU-T, whose wavelength interval may be 20nm, or 100GHz or 50GHz.

### (Tenth Embodiment)

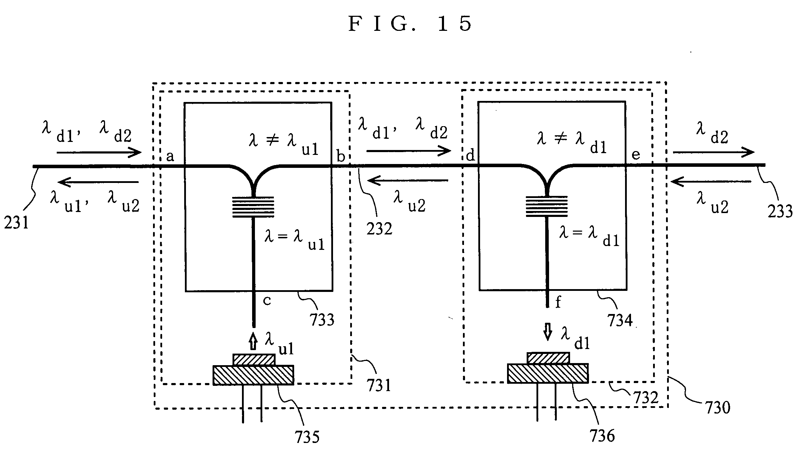

FIG. 15 is a block diagram illustrating the structure of an optical add/drop unit 730 in a bi-directional optical transmission system according to a tenth embodiment of the present invention. The bi-directional optical transmission system according to the tenth embodiment is similar in structure to that illustrated in FIG. 13, except that the optical add/drop unit 700a, the electrical-optical converter 503a, and the optical-electrical converter 504a are replaced by the optical add/drop unit 730. Therefore, FIG. 13 is also referred to in the tenth embodiment.

In FIG. 15, the optical add/drop unit 730 includes an optical transmission module 731 and an optical reception module 732. The optical transmission module 731 includes a wavelength combiner 733 and a semiconductor laser 735. The optical reception module 732 includes a wavelength brancher 734 and a light-receiving element 736.

The operation of the optical add/drop unit 730 is now described below.

Two downstream optical signals having the wavelengths of λ_{d1} and **λ**_{d2}, respectively, propagated through an optical transmission path 231 are given to a terminal a of the wavelength combiner 733 in the optical transmission module 731. In the wavelength combiner 733 of the optical transmission module 731, an optical signal having the wavelength of λᵤₗ is output from a terminal *c*, while other optical signals are output from a terminal *d*. Therefore, the two downstream optical signals having the wavelengths of λ_{d1} and λ_{d2} pass through the optical transmission module 731 to be propagated through an optical transmission path 232 to enter the optical reception module 732.

In the optical reception module 732, the wavelength brancher 734 outputs an optical signal having the wavelength of λ_{d1} from a terminal *f*, and the other optical signals from a terminal e. Therefore, of the two downstream optical signals having the wavelengths of λ_{d1} and **λ**_{d2}**,** respectively, the one having the wavelength of λ_{d1} is output from the terminal *f* to the light-receiving element 736.

The light-receiving element 736 converts the downstream optical signal having the wavelength of **λ**_{d1} to an electrical signal for output. From the terminal e of the wavelength brancher 734, the downstream optical signal having the wavelength of **λ**_{d2} is output to an optical transmission path 233.

On the other hand, an upstream optical signal having the wavelength of **λ**ᵤ₂ propagated through the optical transmission path 233 is given to the terminal e of the wavelength brancher 734 in the optical reception module 732. Of light received at the terminal e of the wavelength brancher 734, only the optical signal having the wavelength of λ_{d1} is interrupted. Thus, the upstream optical signal having the wavelength of λᵤ₂ passes through the wavelength brancher 734 to be propagated through the optical transmission path 232 to the optical transmission module 731.

Of light received at the terminal *b* of the wavelength combiner 733 in the optical transmission module 731, only the optical signal having the wavelength of **λ**ᵤ₁ is interrupted. Thus, the upstream optical signal having the wavelength of **λ**ᵤ₂ passes from the terminal *b* to the terminal *a*.

The semiconductor laser 735 modulates an optical signal with an input electrical signal. The optical signal to be modulated has the wavelength ofλᵤ₁. An upstream optical signal having the wavelength of λᵤ₁ output from the semiconductor laser 735 is given to a terminal c of the wavelength combiner 733, and is then output from the terminal *a*. Thus, the upstream optical signal having the wavelength of **λ**ᵤ₂ is combined with the upstream optical signal having the wavelength of λᵤ₁ for output to the optical transmission path 231.

By using the above-structured optical add/drop unit 730 according to the tenth embodiment, it is possible to achieve integration of the wavelength combining/branching unit, the semiconductor laser, and the light-receiving element, as well as the effects achievable by the ninth embodiment. With this, the slave station can be reduced in size.

In the wavelength combiner 733 and the wavelength brancher 734, the wavelengths that can be combined and the wavelength that can be branched are appropriately selected according to the number of slave stations, for example.

Here, each of the wavelength combiner 733 and the wavelength brancher 734 can be a unit of two fibers fused together, a unit using a wavelength selecting board, a unit using a fiber grating, or a unit using an optical waveguide.

Furthermore, the optical transmission path 232 can be an optical fiber, or a wireless optical transmission path.

Still further, the optical transmission path 232 may be an optical waveguide, for example, integrating the wavelength combiner 733 and the wavelength brancher 734 on an optical material board. Still further, the optical material board may further have the semiconductor laser 735 and the light receiving element 736 integrated thereon.

### (Eleventh Embodiment)

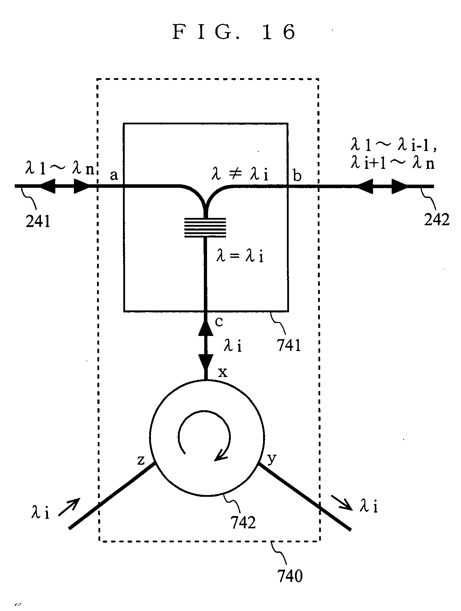

FIG. 16 is a block diagram illustrating the structure of an optical add/drop unit 740 in a bi-directional optical transmission system according to an eleventh embodiment of the present invention. The bi-directional optical transmission system according to the eleventh embodiment is similar in structure to that illustrated in FIG. 13, except that the optical add/drop unit 700a is replaced by the optical add/drop unit 740.

In FIG. 16, the optical add/drop unit 740 includes a wavelength combining/branching unit 741 and an optical circulator 742. Of optical signals having the wavelengths of λ1 to λn given through an optical transmission path 241, the wavelength combining/branching unit 741 outputs an optical signal having the wavelength of λi from its terminal *c*, and the other optical signals from its terminal *b*.

The operation of the optical add/drop unit 740 is described below. In the following descriptions, it is assumed that λi in the wavelength combining/branching unit 741 is set to λ1.

It is also assumed herein that n downstream optical signals having the wavelengths of λ1 to λn, respectively, are propagated through the optical transmission path 241, and are then given to a terminal a of the wavelength combining/branching unit 741. The wavelength combining/branching unit 741 outputs the downstream optical signal having the wavelength of λ1 from the terminal c, and the other optical signals from the terminal b. The downstream optical signal having the wavelength of λ1 output from the terminal c is given to a terminal *x* of the optical circulator 742, and is then output from a terminal *y* thereof. The downstream optical signal output from the terminal *y* is given to the optical-electrical converter 504 of the slave station 590a for conversion to an electrical signal.

An upstream optical signal having the wavelength of λ1 output from the electrical-optical converter 503a of the slave station 590a is given to a terminal *z* of the optical circulator 742. The upstream optical signal having the wavelength of λ1 is then output from the terminal *x* of the optical circulator 742 to the terminal *c* of the wavelength combining/branching unit 741.

It is assumed herein that upstream optical signals having the wavelengths of λ2 to λn, respectively, are propagated through an optical transmission path 242, and are then given to the terminal *b* of the wavelength combining/branching unit 741. These (*n*-1) upstream optical signals pass to the terminal *a* to be combined with the upstream optical signal having the wavelength of λ1 received at the terminal *c*, and the combined signal is sent to the optical transmission path 241.

The above-described operation also applies to the slave stations 500b and 500c. The wavelengths that can be combined and the wavelength that can be branched in the wavelength combining/branching unit of each slave station are appropriately selected according to the number of slave stations, for example.

As such, in the eleventh embodiment, a single wavelength can be shared between the downstream and upstream optical signals for each slave station. Therefore, in addition to the effects obtained in the ninth embodiment, the number of wavelengths for use in the light sources can be reduced. This allows more slave stations to be placed.

Furthermore, a single wavelength combining/branching unit is shared for use in a branching operation in the downstream system and a combining operation in the upstream system. Therefore, the slave station can be reduced in size.

Still further, the terminal *c* of the wavelength combining/branching unit 741 and the terminal *x* of the optical circulator 742 can be connected via an optical fiber, or can be connected wirelessly.

Still further, the wavelength combining/branching unit 741 can be a unit of two fibers fused together, a unit using a wavelength selecting board, a unit using a fiber grating, or a unit using an optical waveguide.

### (Twelfth Embodiment)

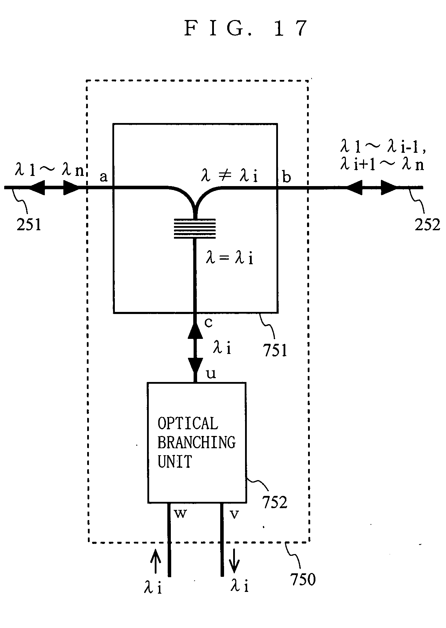

FIG. 17 is a block diagram illustrating the structure of an optical add/drop unit 750 in a bi-directional optical transmission system according to a twelfth embodiment of the present invention. The bi-directional optical transmission system according to the twelfth embodiment is similar in structure to that illustrated in FIG. 13, except that the optical add/drop unit 700a is replaced by the optical add/drop unit 750.

In FIG. 17, the optical add/drop unit 750 includes a wavelength combining/branching unit 751 and an optical branching unit 752. Of optical signals having the wavelengths of λ1 to λn given through an optical transmission path 251, the wavelength combining/branching unit 752 outputs an optical signal having the wavelength of λi from its terminal c, and the other optical signals from its terminal *b*.

The operation of the optical add/drop unit 750 is described below. In the following descriptions, it is assumed that λi in the wavelength combining/branching unit 751 is set to λ1.

It is also assumed herein that *n* downstream optical signals having the wavelengths of λ1 to λn, respectively, are propagated through the optical transmission path 251, and are then given to a terminal a of the wavelength combining/branching unit 751. The wavelength combining/branching unit 751 outputs the downstream optical signal having the wavelength of λ1 from the terminal *c*, and the other optical signals from the terminal *b*. The downstream optical signal having the wavelength of λl output from the terminal *c* is given to a terminal u of the optical branching unit 752 for branching into two optical signals, one being supplied to a terminal *v* and the other being supplied to a terminal *w*. Of these two optical signals, the downstream optical signal output from the terminal *v* is given to the optical-electrical converter 504a. of the slave station 500a for conversion to an electrical signal.

The electrical-optical converter 503a of the slave station 500a outputs an upstream optical signal having the wavelength of λ1 to the terminal *w* of the optical branching unit 752. Then, the upstream optical signal having the wavelength of λ1 is output from the terminal u of the optical branching unit 752 to the terminal *c* of the wavelength combining/branching unit 751.

It is assumed herein that upstream optical signals having the wavelengths of λ2 to λn, respectively, are propagated through an optical transmission path 252, and are then given to the terminal *b* of the wavelength combining/branching unit 751. These (*n*-1) upstream optical signals do not pass to the terminal *c* but pass to the terminal *a* to be combined with the upstream optical signal having the wavelength of λ1 received at the terminal *c*, and the combined signal is sent to the optical transmission path 251.

The above-described operation also applies to the slave stations 500b and 500c.

As such, in the twelfth embodiment, a single wavelength can be shared between the downstream and upstream optical signals for each slave station. Therefore, in addition to the effects obtained in the ninth embodiment, the number of wavelengths for use in the light sources can be reduced. This allows more slave stations to be placed.

Furthermore, with the use of the optical branching unit, the cost required for the slave station can be reduced.

Still further, the terminal *c* of the wavelength combining/branching unit 751 and the terminal u of the optical branching unit 752 can be connected via an optical fiber, or can be connected wirelessly.

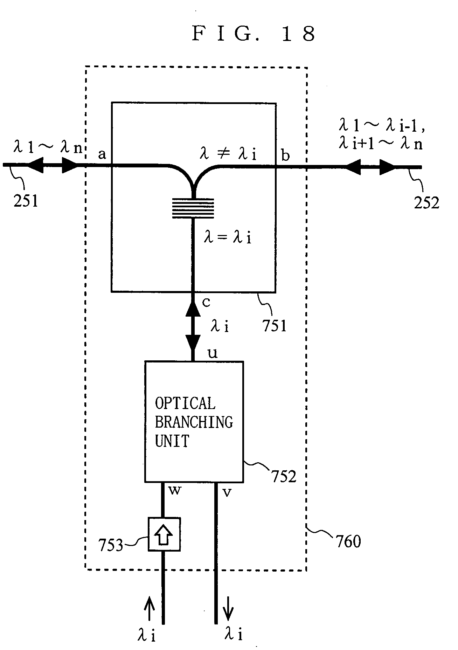

Still further, as illustrated in FIG. 18, in an optical add/drop unit 760, the terminal w of the optical branching unit 752 may be provided with an optical isolator 753. With the optical isolator 753, it is possible to prevent the downstream optical signal having the wavelength of λ1 output from the terminal w from entering the electrical-optical converter 503a.

Still further, the wavelength combining/branching unit 751 can be a unit of two fibers fused together, a unit using a wavelength selecting board, a unit using a fiber grating, or a unit using an optical waveguide.

As described in the foregoing, in the present invention, the master station side and the, slave station side use an optical passive unit or an optical branching unit. With this, a single optical fiber can be shared by the upstream and downstream systems . Also, different wavelengths are assigned to the slave stations, and the master stations performs a wavelength multiplexing process for transmitting a downstream optical signal. Then, the slave station side uses an optical add/drop unit to extract light having the wavelength assigned to its own. This allows a single optical fiber to be shared by the upstream and downstream systems. Therefore, it is possible to provide a bi-directional optical transmission system that can achieve effects of eliminating the need for providing an additional optical fiber and reducing the number of maintenance operations.

While the invention has been described in detail, the foregoing description is in all aspects illustrative and not restrictive. It is understood that numerous other modifications and variations can be devised without departing from the scope of the invention.

## Claims

1. A system for bi-directional optical communications between a master station (400) and a plurality of slave stations (500a, 500b, 500c), wherein
the master station and the slave stations are connected to each other via a single optical fiber,
the master station transmits a downstream optical signal to each of the slave stations via the single optical fiber, and each of the slave stations transmits an upstream optical signal to the master station via the single optical fiber,
the master station includes:
a first electrical-optical converter (403) for converting an electrical signal to the downstream optical signal;
a first optical-electrical converter (404) for converting the upstream optical signal to an electrical signal; and
a first optical exchange element (405), provided between the single optical fiber, and the first electrical-optical converter and the first optical-electrical converter, for outputting the downstream optical signal supplied by the first electrical-optical converter to the single optical fiber and outputting the upstream optical signal transmitted through the single optical fiber to the first optical-electrical converter, and
each of the slave stations includes:
a second electrical-optical converter (503) for converting an electrical signal to the upstream optical signal;
a second optical-electrical converter (504) for converting the downstream optical signal to an electrical'signal; and
a second optical exchange element (505), provided between the single optical fiber, and the second electrical-optical converter and the second optical-electrical converter, for outputting the upstream optical signal supplied by the second electrical-optical converter to the single optical fiber and outputting the downstream optical signal transmitted through the single optical fiber to the second optical-electrical converter.

2. The bi-directional optical transmission system according to claim 1, wherein
the master station further includes:
a signal level adjusting circuit (454) for adjusting an amplitude of an electrical signal, and outputting the amplitude-adjusted electrical signal;
a delay adjusting circuit (455) for adjusting a phase of the electrical signal outputted from the signal level adjusting circuit, and outputting the phase-adjusted electrical signal; and
a combiner (457) for combining the electrical signal outputted from the delay adjusting circuit and the electrical signal outputted from the first optical-electrical converter.

3. The bi-directional optical transmission system according to claim 2, wherein
the signal level adjusting circuit adjusts the amplitude based on a predetermined amplitude value, and
the delay adjusting circuit adjusts the phase based on a predetermined amount of delay.

4. The bi-directional optical transmission system according to claim 2, wherein
the signal level adjusting circuit adjusts the amplitude based on a feedback of an electrical signal obtained by the combiner, and
the delay adjusting circuit adjusts the phase based on the feedback of the electrical signal obtained by the combiner.

5. The bi-directional optical transmission system according to claim 1, wherein
each of the slave stations further includes:
a signal level adjusting circuit (554) for adjusting an amplitude of an electrical signal, and outputting the amplitude-adjusted electrical signal;
a delay adjusting circuit (555) for adjusting a phase of the electrical signal outputted from the signal level adjusting circuit, and outputting the phase-adjusted electrical signal; and
a combiner (557) for combining the electrical signal outputted from the delay adjusting circuit and the electrical signal outputted from the second optical-electrical converter.

6. The bi-directional optical transmission system according to claim 5, wherein
the signal level adjusting circuit adjusts the amplitude based on a predetermined amplitude value, and
the delay adjusting circuit adjusts the phase based on a predetermined amount of delay.

7. The bi-directional optical transmission system according to claim 5, wherein
the signal level adjusting circuit adjusts the amplitude based on a feedback of an electrical signal obtained by the combiner, and
the delay adjusting circuit adjusts the phase based on the feedback of the electrical signal obtained by the combiner.

8. The bi-directional optical transmission system according to claim 1, wherein
the downstream optical signal and the upstream optical signal are different in wavelength band,
the first optical exchange element is a wavelength multiplexing coupler for supplying the downstream optical signal only to the single optical fiber and supplying the upstream optical signal only to the first optical-electrical converter, and
the second optical exchange element is a wavelength multiplexing coupler for supplying the upstream optical signal only to the single optical fiber and supplying the downstream optical signal only to the second optical-electrical converter.

9. The bi-directional optical transmission system according to claim 8, wherein
the first electrical-optical converter outputs a downstream optical signal having a small amount of wavelength dispersion in the single optical fiber, and
the second electrical-optical converter outputs an upstream optical signal having a large amount of wavelength dispersion in the single optical fiber.

10. The bi-directional optical transmission system according to claim 1, wherein
the first optical exchange element is an optical branching unit (425) for branching the upstream optical signal transmitted through the single optical fiber into two optical signals, and
the master station further includes an optical attenuator (436) placed between the first optical exchange element and the first electrical-optical converter.

11. The bi-directional optical transmission system according to claim 10, wherein
the optical attenuator attenuates the upstream optical signal output from the first optical exchange element so that a ratio of an optical power of the upstream optical signal output from the first optical exchange element with respect to an optical power of the downstream optical signal output from the first electrical-optical converter becomes -20dB or lower.

12. The bi-directional optical transmission system according to claim 1, wherein
the second optical exchange element is an optical branching unit (525) for branching the downstream optical signal transmitted through the single optical fiber, and
each of the slave station further includes an optical attenuator (536) placed between the second optical exchange element and the second electrical-optical converter.

13. The bi-directional optical transmission system according to claim 12, wherein
the optical attenuator attenuates the downstream optical signal output from the second optical exchange element so that a ratio of an optical power of the downstream optical signal output from the second optical exchange element with respect to an optical power of the upstream optical signal output from the second electrical-optical converter becomes -20dB or lower.

14. The bi-directional optical transmission system according to claim 1, wherein
the first optical exchange element is an optical branching unit (425) for branching the upstream optical signal transmitted through the single optical fiber into two optical signals, and
the master station further includes an optical isolator (446) placed between the first optical exchange element and the first electrical-optical converter.

15. The bi-directional optical transmission system according to claim 14, wherein
an isolation of the optical isolator is -20dB or lower.

16. The bi-directional optical transmission system according to claim 1, wherein
the second optical exchange element is an optical branching unit (525) for branching the downstream optical signal transmitted through the single optical fiber, and
each of the slave station further includes an optical isolator (546) placed between the second optical exchange element and the second electrical-optical converter.

17. The bi-directional optical transmission system according to claim 16, wherein
an isolation of the optical isolator is -20dB or lower.

18. The bi-directional optical transmission system according to claim 1, wherein
the downstream optical signal and the upstream optical signal are different in wavelength band, and
the first and/or second optical exchange element is an optical branching unit (425, 525) for branching an optical signal transmitted through the single optical fiber into two optical signals.

19. The bi-directional optical transmission system according to claim 1, wherein
the first and second optical exchange elements are optical circulators each having at least three terminals.

20. The bi-directional optical transmission system according to claim 1, wherein
the slave stations are connected to the master station via the single optical fiber to form a bus connection.

21. The bi-directional optical transmission system according to claim 1, wherein
the slave stations are connected to the master station via the single optical fiber to form a star connection.

22. The bi-directional optical transmission system according to claim 1, wherein
the electrical signals supplied to the first and second electrical-optical converters are sub-carrier modulated signals.

23. The bi-directional optical transmission system according to claim 1, wherein
each of the slave stations further includes a frequency converter (561) for converting the electrical signal to be supplied to the second electrical-optical converter to an electrical signal having a frequency band that is different from a frequency band of the electrical signal to be supplied to the first electrical-optical converter.

24. The bi-directional optical transmission system according to claim 1, wherein
frequency bands of the electrical signals supplied to the first and second electrical-optical converters are different from each other, and
each of the slave stations further includes a frequency converter (571) for converting a frequency of the electrical signal output from the second optical-electrical converter to a frequency band of the electrical signal supplied to the first electrical-optical converter.

25. The bi-directional optical transmission system according to claim 1, wherein
the second electrical-optical converters of the slave stations output optical signals having different wavelengths.

26. The bi-directional optical transmission system according to claim 1, wherein
the upstream optical signal output from each of the slave stations has been time-division-multiplexed.

27. The bi-directional optical transmission system according to claim 1, wherein
each of the slave stations further includes a wireless transmitter/receiver (501, 506, 507, 508) for wirelessly transmitting and receiving the downstream electrical signal and the upstream electrical signal.

28. A system for bi-directional optical communications between a master station (480) and a plurality of slave stations (500a, 500b) located on a plurality of groups, wherein
a radio communications area of one group/overlaps with another radio communications area of another group,
the master station and each of the slave stations of a same group are connected to each other via a single optical fiber,
the master station transmits a downstream optical signal to each of the slave stations of the same group via the single optical fiber, and each of the slave stations of the same group transmits an upstream optical signal to the master station via the single optical fiber,
the master station includes, for each of the groups,
a first electrical-optical converter (403) for converting an electrical signal to the downstream optical signal;
a first optical-electrical converter (404) for converting the upstream optical signal to an electrical signal; and
a first optical exchange element (405), provided between the single optical fiber, and the first electrical-optical converter and the first optical-electrical converter, for outputting the downstream optical signal supplied by the first electrical-optical converter to the single optical fiber and outputting the upstream optical signal transmitted through the single optical fiber to the first optical-electrical converter, and
each of the slave stations includes:
a second electrical-optical converter (503) for converting an electrical signal to the upstream optical signal;
a second optical-electrical converter (504) for converting the downstream optical signal to an electrical signal; and
a second optical exchange element (505), provided between the single optical fiber, and the second electrical-optical converter and the second optical-electrical converter, for outputting the upstream optical signal supplied by the second electrical-optical converter to the single optical fiber and outputting the downstream optical signal transmitted through the single optical fiber to the second optical-electrical converter.

29. A master station (450) for bi-directional optical communications with a plurality of slave stations,
the master station being connected to each of the slave stations via a single optical fiber,
the master station transmitting a downstream optical signal to each of the slave stations via the single optical fiber, and receiving an upstream optical signal transmitted from each of the slave stations via the single optical fiber, and
the master station comprising:
an electrical-optical converter (403) for converting an electrical signal to the downstream optical signal;
an optical-electrical converter (404) for converting the upstream optical signal into an electrical signal;
an optical exchange element (405) provided between the single optical fiber, and the electrical-optical converter and the optical-electrical converter, for outputting the upstream optical signal supplied by the electrical-optical converter to the single optical fiber and outputting the downstream optical signal transmitted through the single optical fiber to the optical-electrical converter;
a signal level adjusting circuit (454) for adjusting an amplitude of an electrical signal, and outputting the amplitude-adjusted electrical signal;
a delay adjusting circuit (455) for adjusting a phase of the electrical signal output from the signal level adjusting circuit, and outputting the phase-adjusted electrical signal; and
a combiner (457) for combing the electrical signal output from the delay adjusting circuit and the electrical signal output from the optical-electrical converter.

30. The master station according to claim 29, wherein
the signal level adjusting circuit adjusts the amplitude based on a predetermined amplitude value, and
the delay adjusting circuit adjusts the phase based on a predetermined amount of delay.

31. The master station according to claim 29, wherein
the signal level adjusting circuit adjusts the amplitude based on a feedback of an electrical signal obtained by the combiner, and
the delay adjusting circuit adjusts the phase based on the feedback of the electrical signal obtained by the combiner.

32. A slave station (550) for bi-directional optical communications with a master station,
the slave station being connected to the master station via a single optical fiber,
the slave station receiving a downstream optical signal transmitted from the master station via the single optical fiber, and transmitting an upstream optical signal to the master station via the single optical fiber, and
the slave station comprising:
an electrical-optical converter (503) for converting an electrical signal to the upstream optical signal;
an optical-electrical converter (504) for converting the downstream optical signal into an electrical signal;
an optical exchange element (505) provided between the single optical fiber, and the electrical-optical converter and the optical-electrical converter, for outputting the upstream optical signal supplied by the electrical-optical converter to the single optical fiber and outputting the downstream optical signal transmitted through the single optical fiber to the optical-electrical converter;
a signal level adjusting circuit (554) for adjusting an amplitude of an electrical signal, and outputting the amplitude-adjusted electrical signal;
a delay adjusting circuit (555) for adjusting a phase of the electrical signal output from the signal level adjusting circuit, and outputting the phase-adjusted electrical signal; and
a combiner (557) for combing the electrical signal output from the delay adjusting circuit and the electrical signal output from the optical-electrical converter.

33. The slave station according to claim 32, wherein
the signal level adjusting circuit adjusts the amplitude based on a predetermined amplitude value, and
the delay adjusting circuit adjusts the phase based on a predetermined amount of delay.

34. The slave station according to claim 32, wherein
the signal level adjusting circuit adjusts the amplitude based on a feedback of an electrical signal obtained by the combiner, and
the delay adjusting circuit adjusts the phase based on the feedback of the electrical signal obtained by the combiner.

35. A system for bi-directional optical communications between a master station (490) and a plurality of slave stations (590a, 590b, 590c), wherein
the master station and the slave stations are connected to each other via a single optical fiber,
the slave stations are assigned different wavelengths of downstream optical signals transmitted from the master station to the slave stations,
the slave stations are assigned different wavelength of upstream optical signals transmitted from the slave stations to the master station,
the master station transmits the downstream optical signals to the respective slave stations via the single optical fiber, and the slave stations respectively transmit the upstream optical signals to the master station via the single optical fiber,
the master station includes:
a plurality of first electrical-optical converters (403a, 403b, 403c), provided correspondingly to the slave stations, each for converting an electrical signal to a downstream optical signal having a wavelength assigned to a corresponding slave station;
a plurality of optical-electrical converters (404a, 404b, 404c) , provided correspondingly to the slave stations, each for converting an upstream optical signal supplied by a corresponding slave station to an electrical signal; and
a wavelength multiplexer/demultiplexer (495) for wavelength-multiplexing the downstream optical signals supplied by the first electrical-optical converters and outputting a multiplexed signal to the single optical fiber, and for wavelength-demultiplexing the upstream optical signals transmitted through the single optical fibers and outputting optical signals correspondingly in wavelength to the first optical-electrical converters, and
each of the slave stations includes:
a second electric-optical converter (503a) for converting an electrical signal to an upstream optical signal having a wavelength assigned to the slave station;
a second optical-electrical converter (504a) for converting the downstream optical signal to an electrical signal; and
an optical add/drop unit (700a), provided between the single optical fiber, and the second electrical-optical converter and the second optical-electrical converter, for outputting the upstream optical signal supplied by the second electrical-optical converter to the single optical fiber and outputting only a downstream optical signal having a wavelength assigned to the slave station from out of the downstream optical signals transmitted through the single optical fiber to the second optical-electrical converter.

36. The bi-directional optical transmission system according to claim 35, wherein
the optical add/drop unit is structured by connecting, in series, two wavelength combining/branching units (721, 722) each having three terminals.

37. The bi-directional optical transmission system according to claim 35, wherein
the optical add/drop unit (730) includes:
a wavelength combiner (733) for combining the upstream optical signal output from the second electrical-optical converter (735) and the upstream optical signal transmitted through the single optical fiber; and
a wavelength separator (734) for separating only an optical signal having a wavelength assigned to a corresponding slave station from a plurality of said downstream optical signals transmitted through the single optical fiber, and outputting the separated optical signal to the second optical-electrical converter (736),
the wavelength combiner and the second electrical-optical converter is integrated as an optical transmission module (731), and
the wavelength separator and the second optical-electrical converter is integrated as an optical reception module (732).

38. The bi-directional optical transmission system according to claim 35, wherein
the optical add/drop unit (740) includes:
a wavelength combining/branching unit (741) having three terminals; and
an optical circulator (742) having first, second, and third terminals, the first terminal being connected to one of the three terminals of the wavelength combining/branching unit, for transmitting and receiving only an optical signal having a wavelength assigned to a corresponding slave station,
the second terminal of the optical circulator is connected to the second electrical-optical converter and the third terminal of the optical circulator is connected to the second optical-electrical converter, and
the wavelength of the downstream optical signal and the wavelength of the upstream optical signal assigned to each of the slave stations are equal to each other.

39. The bi-directional optical transmission system according to claim 35, wherein
the optical add/drop unit (750) includes:
a wavelength combining/branching unit (751) having three terminals; and
an optical branching unit (752) having first, second, and third terminals, the first terminal being connected to one of the three terminals of the wavelength combining/branching unit, for transmitting and receiving only an optical signal having a wavelength assigned to a corresponding slave/station,
the second terminal of the optical branching unit is connected to the second electrical-optical converter and the third terminal of the optical branching unit is connected to the second optical-electrical converter, and
the wavelength of the downstream optical signal and the wavelength of the upstream optical signal assigned to each of the slave stations are equal to each other.

40. The bi-directional optical transmission system according to claim 39, wherein
the optical add/drop unit further includes
an optical isolator (753) placed between the second terminal of the optical branching unit and the second electrical-optical converter.

41. The bi-directional optical transmission system according to claim 35, wherein
the electrical signals supplied to the first electrical-optical converter and the second electrical-optical converter are sub-carrier modulated signals.

42. The bi-directional optical transmission system according to claim 35, wherein
each of the slave stations further includes
a wireless transmitter/receiver (501, 506, 507, 508) for wirelessly transmitting and receiving the upstream electrical signal supplied to the second electrical-optical converter and the downstream electrical signal output from the second optical-electrical converter.

43. The bi-directional optical transmission system according to claim 42, wherein
the upstream electrical signal and the downstream electrical signal are portable phone signals.

44. The bi-directional optical transmission system according to claim 35, wherein
a wavelength interval for each of the slave station is 20nm.
